# EUROPEAN PATENT SPECIFICATION

(11) **EP 4 149 071 B1**
(45) Date of publication and mention of the grant of the patent: **01.01.2025**
(21) Application number: 20940348.4
(22) Date of filing: 12.06.2020
(51) Int. Cl.: G06F 9/48, H04L 67/60, H04L 67/148

(54) **ARTIFICIAL INTELLIGENCE RESOURCE SCHEDULING METHOD AND APPARATUS, STORAGE MEDIUM, AND CHIP**
VERFAHREN UND VORRICHTUNG ZUR RESSOURCENPLANUNG VON KÜNSTLICHER INTELLIGENZ, SPEICHERMEDIUM UND CHIP
PROCÉDÉ ET APPAREIL DE PLANIFICATION DE RESSOURCES D'INTELLIGENCE ARTIFICIELLE, SUPPORT DE STOCKAGE ET PUCE

(43) Date of publication of application: 15.03.2023
(73) Proprietor: Huawei Technologies Co., Ltd., Shenzhen, Guangdong 518129, (CN)
(72) Inventor: ZHOU, Jun, Shenzhen, Guangdong 518129 (CN)
(74) Representative: MERH-IP Matias Erny Reichl Hoffmann Patentanwälte PartG mbB
(86) International application number: PCT/CN2020/095690
(87) International publication number: WO 2021/248423

(56) References cited:
- WO-A1-2018/218259
- CN-A- 107 888 669
- CN-A- 110 138 440
- CN-A- 111 258 716
- CN-A- 111 258 716
- ZHANG LI ET AL: "Edge-to-Edge Cooperative Artificial Intelligence in Smart Cities with On-Demand Learning Offloading", 2019 IEEE GLOBAL COMMUNICATIONS CONFERENCE (GLOBECOM), IEEE, 9 December 2019 (2019-12-09), pages 1 - 6, XP033722596, DOI: 10.1109/GLOBECOM38437.2019.9013878

## Description

### TECHNICAL FIELD

This application relates to the field of artificial intelligence, and specifically, to an artificial intelligence resource scheduling method and apparatus, a storage medium, and a chip.

### BACKGROUND

With the development of artificial intelligence (AI), there are more intelligent application scenarios, especially large-scale, multi-scenario, or all-scenario deployment environments such as public cloud, private cloud, edge computing, internet of things industry terminals, and consumer terminals. When an AI task is executed, an execution device is required, and the execution device needs to include resources that executes the AI task. These resources include, for example, an operation apparatus for an AI algorithm, an input/output apparatus, a communication apparatus, and a storage apparatus. In a current AI application scenario, an AI task executed by each device is fixed, and each AI task is also independently executed. However, due to various reasons such as performance differences between devices, different execution frequencies of each AI task, and different resources required for executing each AI task, resources for executing the AI task may not be effectively used. For example, some AI devices have a very high configuration, but have few to-be-executed tasks, and therefore these AI devices are often in an idle state. For another example, some AI devices have a low configuration, and therefore precision is low when these AI tasks are executed. For another example, some AI devices undertake a large quantity of AI tasks, and therefore many AI tasks cannot be executed in time. Therefore, how to improve utilization of AI resources is an urgent problem to be resolved.
CN 111 258 716 A discloses an artificial intelligence edge computing system based on container cloud technology. Across edge machine learning systems, it is enabled for services to migrate from a first edge artificial intelligence module to a second edge artificial intelligence module, for instance when the system resource load of the first edge artificial intelligence module is too high, while the resource load of the second edge artificial intelligence module is low.
Zhang Li et al: "Edge-to-Edge Cooperative Artificial Intelligence in Smart Cities with On-Demand Learning Offloading", 9 December 2019, XP33722596 discloses cooperative learning offloaded scheme with cloud, wherein the centralized cloud links the edge servers and end devices through internet. Therein, different edge servers are varied in computing, storage, and energy resources. Further, the processing time of the same task varies on different edge servers due to the hardware heterogeneity. By using an optimal algorithm, subtasks are allocated to proper adjacent edge servers.

### SUMMARY

This application provides an artificial intelligence resource scheduling method and apparatus, a storage medium, and a chip, to effectively improve utilization of artificial intelligence resources.

According to a first aspect, an artificial intelligence resource scheduling method is provided. The scheduling method includes: obtaining scheduling information of each artificial intelligence device in a plurality of AI devices, where the scheduling information includes at least one of the following: task information of one or more AI tasks executed by each AI device or resource information of each AI device, the one or more AI tasks include at least one of an AI task being executed or an AI to be executed by each AI device, and the resource information indicates an AI computing resource used by each AI device to execute the one or more AI tasks; determining a first device and a second device from the plurality of AI devices based on the scheduling information of each AI device; and transferring at least one AI task in one or more AI tasks of the first device to the second device.

In the technical solutions of this application, the plurality of AI devices can collaborate by scheduling AI resources, thereby improving utilization of the artificial intelligence resources.

It should be noted that, in embodiments of this application, the artificial intelligence device (the AI device) is a device that can execute an AI task, that is, includes both a terminal device that can execute an AI task and a cloud device that can execute an AI task.

The task information may be understood as information about an execution status of an AI task, and may include information such as a task type, a task quantity, a resource occupied by the task, a time length spent on each task, and model precision or size required by the task. The task information includes an estimated time length required by the artificial intelligence device to complete the one or more AI tasks (that is, the AI task being executed and the AI task to be executed). For brevity, the time length of the first device is referred to as a first time length, and the time length of the second device is referred to as a second time length. The task information may include information about one or more of a task that has been previously executed, a task currently being executed, or a task to be executed by the artificial intelligence device.

It should be noted that the task type may also be understood as a category of an AI task, for example, may include speech recognition, image recognition, and the like. Refer to the foregoing related descriptions, and details are not listed herein again. The task quantity may include an accumulated quantity of execution times of a historical task (for example, an accumulated quantity of execution times of a same task), a quantity of tasks being executed simultaneously, a quantity of tasks to be executed, and the like. The resource occupied by the task may be understood as usage of an AI processor by an AI task, and may include one or more resources such as an occupied storage resource, an occupied operation resource, an occupied hardware resource, or an occupied software resource. The time length spent on each task may be understood as a time length from start to end of the task, and herein may refer to a time length spent on each task that has been executed, an estimated time length spent on each task being executed, or an estimated time length spent on each task to be executed. The model precision or size required by the task may be understood as a precision level or a size level of a model corresponding to a task.

It should be further noted that the task information does not need to be obtained continuously, for example, may be obtained when a task situation changes. In other words, an execution frequency for obtaining the task information may be set based on an actual situation.

With reference to the first aspect, the first device and the second device meet the following condition: A first time length of the first device is greater than a second time length of the second device. The first time length indicates a time length required by the first device to complete one or more AI tasks (that is, an AI task being executed and an AI task to be executed). The second time length indicates a time length required by the second device to complete one or more AI tasks (that is, an AI task being executed and an AI task to be executed). The first time length is a time required by the first device to complete one or more AI tasks. The one or more AI tasks may include at least one of an AI task being executed by the first device and/or an AI task to be executed by the first device. The second time length is a time length required by the second device to complete one or more AI tasks. The one or more AI tasks may include at least one of an AI task being executed by the second device and/or an AI task to be executed by the second device.

According to the first aspect, a time length threshold is preset. More specifically, a first time length threshold and a second time length threshold are set. The first time length threshold is a critical value at which the artificial intelligence device is about to enter a busy state. In other words, when it is estimated that the artificial intelligence device still needs a long time to process all tasks, it is considered that the artificial intelligence device is busy. Therefore, when a time length still required to process the all tasks is greater than or equal to the first time length threshold, it is considered that the artificial intelligence device is in the busy state. The second time length threshold is a critical value at which the artificial intelligence device is about to enter an idle state. In other words, when the artificial intelligence device is about to complete all tasks or there is no task that needs to be executed, it is considered that the artificial intelligence device is idle. Therefore, when an estimated time length required for completing the all tasks is less than or equal to the second time length threshold, it is considered that the artificial intelligence device is in the idle state or is about to enter the idle state. For the first time length, the first time length threshold may be understood as an upper limit value of the time length required by the AI device to execute the AI task, and the second time length threshold may be understood as a lower limit value of the time length required by the AI device to execute the AI task. For example, when the time length (for example, the first time length or the second time length) required by the AI device to execute the AI task is greater than or equal to the first time length threshold, the artificial intelligence device may report task information, so that a scheduling apparatus or a scheduling device can obtain the task information of the artificial intelligence device. For another example, when the time length required by the AI device to execute the AI task is less than or equal to the second time length threshold, the artificial intelligence device may report task information, so that a scheduling apparatus or a scheduling device can obtain the task information of the artificial intelligence device. Both the first time length threshold and the second time length threshold are set. It should be further understood that, in this embodiment of this application, the scheduling apparatus or the scheduling device may be integrated into the AI device. In this case, it is equivalent to that an Al device can obtain task information and/or resource information reported by another AI device.

With reference to the first aspect, whether to transfer the AI task of the first device to the second device is determined in a manner of setting a time length threshold. The first time length threshold and the second time length threshold are set, and the first time length threshold is greater than the second time length threshold. When the first time length of the first device is greater than or equal to the first time length threshold and the second time length of the second device is less than or equal to the second time length threshold, the at least one AI task of the first device is transferred to the second device, that is, this is equivalent to transferring some or all of tasks of an AI device in a busy state in the plurality of AI devices to an Al device in an idle state.

Optionally, the AI computing resource may include a hardware AI computing resource, a software AI computing resource, and the like of the AI device. The hardware AI computing resource may indicate information about a hardware resource used by the AI device to execute an AI task, and the software AI computing resource may indicate information about a software resource used by the AI device to execute an AI task.

The hardware AI computing resource may be understood as corresponding information of a hardware condition required by the device to execute an AI task, including a storage space size, a supported input type, a supported output type, a number of inputs, a number of outputs, and processor information. The storage space size may include, for example, a ROM space size and a RAM space size. The input type may include, for example, voice input, text input, image input, and video input, and may further include, for example, a microphone, a camera, a video camera, and a sensor. The number of inputs refers to one or more inputs, for example, may include one or more voice inputs, and may further include one or more microphones. The output type may include, for example, an image type, an identifier, an image or voice with an identifier, and a search result, that is, processed data corresponding to different AI tasks. The number of outputs can also be one or more outputs. A processor type is a type of a processor configured to perform an AI operation, for example, may include a central processing unit, a microprocessor, an application-specific integrated circuit, a graphics processing unit, or a neural network processor.

The software AI computing resource may be understood as corresponding information for setting a software condition required for executing an AI task, for example, may include computing power, an execution time of an AI task, and the like. The computing power may be understood as an operation capability of the device when executing an AI task, for example, may be represented by a quantity of operations per second. Larger quantity of operations indicates a faster operation speed of the device. When same tasks are executed, a required execution time is shorter if other conditions are the same. The execution time of the AI task may be understood as a time length from initiation to end of an AI task.

Optionally, an executable task of the AI device may be determined based on the foregoing resource information. The executable task may be understood as an AI task executed by using the AI device. Optionally, information such as a type of the executable task, an execution time required by each executable task, and a model corresponding to the executable task may be determined based on the foregoing resource information. The corresponding model may have been configured on the device, or may have not been configured on the device. Information about the executable task may include information such as a model size, model precision, an input type, an output type, and computing amount (computing power required when the model is used for operation) that are of the corresponding model, and may further include a processor type required by the corresponding model.

It should be noted that, because the resource information usually does not change frequently, the resource information of the artificial intelligence device may be obtained when the artificial intelligence device is powered on, and does not need to be obtained frequently. It should be further understood that resource information of a plurality of artificial intelligence devices may be obtained simultaneously, or may not be obtained simultaneously, and there is no limitation on an obtaining sequence.

With reference to the first aspect, in some implementations of the first aspect, the first device and the second device may meet the following condition: A resource (an AI computing resource) used to execute an AI task and that is of the first device is less than a resource used to execute an AI task and that is of the second device.

Some or all tasks of an artificial intelligence device with a small quantity of resources are allocated to an artificial intelligence device with a large quantity of resources, and/or some or all tasks of a busy AI device in the plurality of AI devices are transferred to an idle AI device, so that utilization of AI resources can be effectively improved.

In other words, the first device may be a device that is in the plurality of AI devices and whose available resources (for example, the foregoing AI computing resource) are less than available resources of the second device, that is, a to-be-executed task of an artificial intelligence device with a small quantity of available resources is allocated to an artificial intelligence device with a large quantity of available resources.

It should be noted that the small quantity of available resources may be understood as a small quantity of or weak AI computing resources. In other words, a quantity of resources used by the artificial intelligence device to execute the AI task is small or the resources used by the artificial intelligence device to execute the AI task are weak. For example, storage space is limited, and a model with high precision cannot be supported. For another example, computing power of the artificial intelligence device is insufficient, and a complex operation cannot be supported. For another example, an execution rate is low.

It should be understood that the AI task may be transferred based on another basis. For example, a priority sequence of the AI devices may be set, and an AI device with a higher priority is set to preferably execute an AI task, and an AI device with a lower priority then executes an AI task. For further example, the priority may be determined based on the resource information of the AI device, and an AI device with a large quantity of resources is set to have a high priority. For another example, priorities of the AI device for different AI task categories may be set. For example, assuming that an AI device is mainly configured to process an image-related AI task, an AI task to be executed may be preferably transferred to the AI device. Another non-image-related AI task that originally needs to be executed by the AI device is preferably transferred to another device.

It should be further understood that, in this embodiment of this application, there may be a case in which no task is finally transferred. For example, it is assumed that when it is found that all AI devices are busy, the AI task may not be transferred. For another example, although the first device has an AI task to be executed, the AI task cannot be executed by the second device, and an AI task being executed by the first device and the AI task to be executed by the first device may not be transferred to the second device. The foregoing case of no transfer may be considered as that no suitable second device is found.

Optionally, the transferring of the AI task may include model loading (configuration) and data loading. The model loading may be understood as configuring a model corresponding to the transferred AI task on the second device. For example, if a speech recognition task needs to be transferred, a speech recognition model may be configured for the second device. The data loading may be understood as that data needs to be provided for the second device when the AI task is transferred, so that the second device can process to-be-processed data. For example, for an image classification task, the data loading may be understood as providing to-be-processed image data for the second device by the first device, so that the second device can process the to-be-processed image data by using a model corresponding to the image classification task.

Optionally, when the second device already has a model of a to-be-transferred AI task, the second device is instructed to use the existing model to execute a corresponding AI task without reloading a model. For example, if the determined at least one AI task to be transferred to the second device includes one speech recognition task, and the second device already has a proper speech recognition model, the second device is instructed to execute the speech recognition task by using the existing speech recognition model, and no model needs to be configured for the second device.

With reference to the first aspect, in some implementations of the first aspect, when the second device has at least one model, the second device is instructed to execute a to-be-transferred AI task (the at least one AI task of the first device) by using the at least one model, where the at least one model is an AI model that executes the at least one AI task.

Optionally, when the second device does not have a model of a to-be-transferred AI task, the model that the second device does not have is sent to the second device, and the second device is instructed to use the obtained model to execute a corresponding AI task, which is equivalent to a case in which a model needs to be reloaded. For example, if the determined at least one AI task to be transferred to the second device includes one speech recognition task, but the second device does not have a speech recognition model or an existing speech recognition model is not proper, a proper voice model may be sent to the second device, and the second device is instructed to execute the speech recognition task by using the received proper speech recognition model, which is equivalent to a case in which a model needs to be configured for the second device.

With reference to the first aspect, in some implementations of the first aspect, when the second device does not have the at least one model, the at least one model is sent to the second device, and the second device is instructed to execute the at least one AI task by using the at least one model, where the at least one model is an AI model that executes the at least one AI task.

In other words, when a task of an AI device is transferred to be executed by another AI device, a corresponding model existing in the another AI device may be used for execution. When there is no corresponding model in the another AI device, reallocation and downloading may be further requested.

For example, it is assumed that one AI device is a tablet, and the other AI device is a smart screen. Both of them can execute a voice search task. However, the tablet has poor computing power, a voice search model mounted on the tablet is a small model (or a low-precision model), and a voice search model of the smart screen is a large model (or a high-precision model). When a voice search task that originally needs to be executed on the tablet is transferred to the smart screen for execution, the original high-precision voice search model of the smart screen may be used for execution. Assuming that there is no voice search model in the smart screen originally, a high-precision voice search model may be loaded (which may also be referred to as configured, set, downloaded, or loaded) for the smart screen. For example, the model may be requested to be downloaded from a device that stores models or cloud storage. Assuming that there is a voice search model in the smart screen originally, but the model is a low-precision voice search model, a high-precision model may still be loaded to the smart screen, or it may be considered that the original model is replaced.

With reference to the first aspect, in some implementations of the first aspect, after completing execution of the at least one AI task, the second device is instructed to delete one or more models corresponding to the at least one executed AI task.

Optionally, a manner of combining pre-installation and request loading may be used, so that models of different devices can meet requirements. The pre-installation may be performed when an initial AI resource is set, which is equivalent to installing a different AI task model for each device in an initial state. The request loading manner means that when a device needs to execute an AI task but has no corresponding proper model, the device initiates a request, and then obtains a corresponding model from an apparatus or a unit that stores models.

Optionally, after a new model is installed and a corresponding task is executed, the device may further delete the new model, to release a resource occupied by the new model.

Optionally, to further reduce storage overheads, a periodic aging mechanism may be further used. In other words, a model that has not been used for a long time is deleted from the AI device, and is downloaded again when necessary. For example, a third time length threshold may be preset, and a model is deleted when a time interval from a time when the model is used for the last time is greater than or equal to the third time length threshold.

With reference to the first aspect, in some implementations of the first aspect, a third device in the plurality of AI devices has a model of a first AI task, and the first AI task is an AI task whose time interval from a moment of last execution to a current moment is greater than or equal to the third time length threshold, and the third device is instructed to delete the model of the first AI task. The third device may be understood as any device in the plurality of AI devices described above. In other words, the third device may be the first device, the second device, or another device.

Optionally, the model may be labeled, that is, a label is set for the model, to simplify a selection process.

Optionally, models of different AI tasks may be stored in a cloud device, or may be stored in a local device having large operation and storage capabilities, for example, a host. Model parameters can be used to add different labels to models, for example, computing amount, a model size, an input type, an output type, and an Al task category of a model.

With reference to the first aspect, in some implementations of the first aspect, whether the second device has the at least one model is determined based on a model label stored in the second device, where the model label includes a label of at least one of the following parameters: computing amount, a model size, an input type, an output type, and an AI task category. In other words, whether the second device has a corresponding model of the to-be-transferred AI task is determined based on the model label.

Through the preceding model labeling, proper models can be quickly found and allocated to different devices.

According to a second aspect, an artificial intelligence resource scheduling apparatus is provided. The scheduling apparatus includes units configured to perform the method in any implementation of the first aspect. The scheduling apparatus includes an obtaining unit and a processing unit.

According to a third aspect, an artificial intelligence resource scheduling apparatus is provided. The scheduling apparatus includes: a memory, configured to store a program; a processor, configured to execute the program stored in the memory, and when the program stored in the memory is executed, the processor is configured to perform the method in any implementation of the first aspect.

According to a fourth aspect, a computer-readable medium is provided. The computer-readable medium stores program code to be executed by a device, and the program code includes instructions used for performing the method in any implementation of the first aspect.

According to a fifth aspect, a computer program product including instructions is provided. When the computer program product is run on a computer, the computer is enabled to perform the method in any implementation of the first aspect.

According to a sixth aspect, a chip is provided. The chip includes a processor and a data interface. The processor reads, through the data interface, instructions stored in a memory, to perform the method in any implementation of the first aspect.

Optionally, in an implementation, the chip may further include the memory. The memory stores the instructions. The processor is configured to execute the instructions stored in the memory. When the instructions are executed, the processor is configured to perform the method in any implementation of the first aspect.

### BRIEF DESCRIPTION OF DRAWINGS

FIG. 1 is a schematic diagram of task execution in an artificial intelligence scenario to which an embodiment of this application is applicable;
FIG. 2 is a schematic diagram of a system architecture according to an embodiment of this application;
FIG. 3 is a schematic flowchart of a scheduling method according to an embodiment of this application;
FIG. 4 is a schematic diagram of a scheduling method according to an embodiment of this application;
FIG. 5 is a schematic flowchart of a scheduling method according to an embodiment of this application;
FIG. 6 is a schematic block diagram of a scheduling apparatus according to an embodiment of this application; and
FIG. 7 is a schematic diagram of a hardware structure of a scheduling apparatus according to an embodiment of this application.

### DESCRIPTION OF EMBODIMENTS

The following describes the technical solutions in embodiments of this application with reference to the accompanying drawings in embodiments of this application.

The solutions of this application may be applied to various artificial intelligence scenarios, to schedule artificial intelligence resources in the scenarios, thereby fully utilizing resources.

For ease of understanding, the following first describes an execution process of an AI task and possible required resources. The AI task in this embodiment of this application is an artificial intelligence-based task. For example, classification may be performed based on a function of the task, for example, may include speech recognition, machine vision, and text recognition. The speech recognition includes, for example, voice search, voice input, speech synthesis, and an intelligent voice assistant. The machine vision includes, for example, facial recognition, human body recognition, image search, video search, image tracking, image recognition, and visual detection. The text recognition includes, for example, intelligent translation and text conversion. The following describes several tasks in the foregoing AI tasks by using examples.
(1) Voice search and input: implements search and input by converting what humans say into text. This task can overcome obstacles caused by pinyin and rare characters, reduce use costs, and greatly improve input efficiency of a user.
(2) Intelligent voice assistant: implements a function of a conversation between a machine and a person, which is equivalent to enabling the machine to understand user's words and provide corresponding feedback to the user's words.
(3) Video search and recommendation: analyzes video content, identifies the video content through one or more dimensions such as video optical character recognition, video public figure recognition, video scene recognition, video classification, and video speech recognition, and automatically extracts a video content tag to implement intelligent search and recommendation of the video content.
(4) Optical character recognition (OCR): implements quick text recognition and output. On the basis of the optical character recognition, services such as character imaging, character recognition, character output, and automatic enhancement can be supported. These services can be used to recognize and detect certificate information and a text, a document, or a publicity material in a natural scenario.
(5) Facial recognition: applicable to access control, identity authentication, face detection, face search, face comparison, and face location.
(6) Image recognition: may include image classification, image search by image, identification of a specific object in an image, scene identification, scene classification, image tagging, image security monitoring (pornography and violence monitoring), and intelligent image management.

In addition, categories of AI tasks may be further classified based on application fields, for example, may include the communications field, the computer field, and the industrial production field. Details are not described herein again.

When an AI task is executed, at least an input apparatus needs to be configured to obtain to-be-processed data, an execution apparatus needs to be configured to perform an operation of an AI algorithm, and invoke, establish, and store an AI model, and the like, and an output apparatus needs to output processed data. For example, for a speech recognition AI task, a microphone is required to collect voice data, or existing voice data may be read from a storage apparatus by using a reading apparatus. In this case, the microphone and the reading apparatus may be considered as input apparatuses. An execution apparatus is further required for the speech recognition task. The execution apparatus is configured to perform processing such as feature extraction and classification on obtained voice data, and obtain processed voice data. In this case, the execution apparatus may need to perform possible operations such as feature extraction and classification by using a speech recognition model, and the speech recognition model may be obtained by using a training apparatus, or may be obtained from another apparatus or device by using a communication apparatus, for example, may be downloaded from a cloud device. When performing an AI operation, the execution apparatus may perform processing by using a processor. The obtained processed voice data further needs to be output by using an output apparatus, for example, may be output by using a communication interface, or may be output after processing such as format conversion is performed.

Therefore, the artificial intelligence resource may be understood as a resource required for executing an AI task. The resource may include one or more resources such as storage space required by a model, an input type, an output type, computing power, an operation time length, and a quantity of input/output apparatuses (which may be understood as a quantity of inputs and a quantity of outputs).

The storage space required by the model may further be understood as a model size, for example, a quantity of read-only memory (ROM) space that needs to be occupied by the model and a quantity of random access memory (RAM) space that needs to be occupied by the model.

The input type may be understood as an input data type, for example, may include voice data and image data. For another example, the input data may be to-be-processed data (for example, voice, text, and image) itself, or may be data obtained after some preprocessing (for example, filtering, noise elimination, digital-to-analog conversion, and analog-to-digital conversion) is performed on the to-be-processed data, or may be a feature vector/matrix obtained after feature extraction is performed on the to-be-processed data.

The output type may be understood as an output data type, for example, may include a category, a label, a text, an image, or a voice.

The computing power is an indicator used to measure an operation capability of a device when the device performs an AI operation, for example, may be represented by a quantity of operations per second (OPS). Larger OPS indicates a faster operation speed of the device. When same tasks are executed, a required execution time is shorter if other conditions are the same.

The execution time length refers to a time length for executing an AI task, and may be understood as a time length from initiation to end of the task.

The input apparatus may be, for example, a microphone, a camera, a video camera, or a keyboard. For another example, the input apparatus may be various terminal devices such as a mobile phone, a computer, or a tablet computer.

In an existing artificial intelligence scenario, an AI task is usually independently executed by a terminal device, or may be jointly completed by a terminal device and a cloud device. However, in this device-cloud combination case, for the terminal device, the AI task is still independently executed by the terminal device, and the cloud device only cooperates to perform some operations of the terminal device.

The cloud device usually cooperates with the terminal device to execute one or more AI tasks, and one cloud device usually does not serve only one terminal device. In other words, for an AI task, only a combination of one terminal device and one cloud device participating in the AI task, but the cloud device also serves another terminal device.

AI tasks are not exchanged between terminal devices. However, due to independence between the devices, a task executed by each terminal device can only be a task in a task set of the terminal device, and execution quality (for example, an execution rate and precision) is completely limited by performance of the terminal device. For example, it is assumed that a terminal device #1 is a headset and can perform a voice wakeup task, and it is assumed that a terminal device #2 is a mobile phone and can perform tasks such as voice wakeup, voice search, and speech recognition. In this case, although both the headset and the mobile phone can execute the voice wakeup task, because AI computing power of the headset is weak and storage space is small, only a voice wakeup model with low precision and small occupied space can be used, and therefore precision for executing voice wakeup is also low and an execution rate is low; while AI computing power of the mobile phone is strong and storage space is large, and a voice wakeup model with higher precision but large occupied space may be used, and therefore precision for executing voice wakeup is also high, and an execution rate is high. For another example, it is assumed that both a terminal device #1 and a terminal device #2 are mobile phones, and can execute tasks such as speech recognition, image classification, facial recognition, and video search. It is assumed that the terminal device #1 is being used to execute a video search task, and there are a plurality of tasks to be executed in a queue such as image classification and facial recognition. However, the terminal device #2 has no task to be executed. In this case, efficiency of executing the tasks by the terminal device #1 is low, and resources of the terminal device #2 are idle, resulting in a waste of resources.

Based on a case in which execution resources are not fully used in the foregoing independent execution process, for example, execution efficiency is low, precision is insufficient, or resources are idle, this application provides a method for effectively improving utilization of the execution resources. Resources of a plurality of artificial intelligence devices are scheduled, so that tasks executed by the artificial intelligence devices are shared and available resources are shared, thereby improving utilization of the execution resources. For example, an artificial intelligence device with a low configuration can perform a higher-precision operation by using another artificial intelligence device with a high configuration, to achieve a better task execution result. For another example, a busy artificial intelligence device can execute a to-be-processed task by using another idle artificial intelligence device, thereby shortening a waiting time of the task.

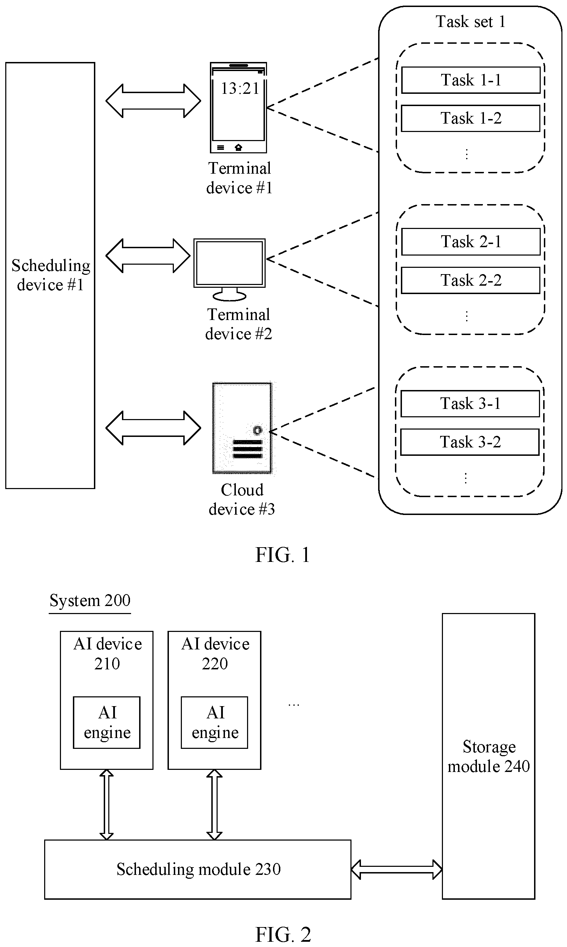

FIG. 1 is a schematic diagram of task execution in an artificial intelligence scenario to which an embodiment of this application is applicable. As shown in FIG. 1, the scenario includes a scheduling device #1, a terminal device #1, and a terminal device #2. Executable tasks of the terminal device #1 and the terminal device #2 jointly form a task set 1. It is assumed that a task executed by the terminal device #1 is represented by a task 1-i, where i is a positive integer, and a task executed by the terminal device #2 is represented by a task 2-j, where j is a positive integer. In this case, there may be same tasks in the task 1-i and the task 2-j. For example, a task 1-1 and a task 2-2 are both image recognition tasks, and the same tasks may be combined. It should be noted that, in a broad sense, the task set 1 includes all tasks executed by the terminal device #1 and the terminal device #2. Therefore, a quantity of task types included in the task set 1 is not changed even if the same tasks of the terminal device #1 and the terminal device #2 are not combined.

The scenario shown in FIG. 1 may further include a cloud device #3, and an executable task of the cloud device #3 may be represented by a task 3-k, where k is a positive integer. It should be noted that the cloud device may independently execute an AI task, or may cooperate with the terminal device to execute an AI task. However, it should be understood that these tasks may be referred to as tasks executed by the cloud device.

For example, it is assumed that an AI task is jointly executed by the terminal device and the cloud device. For example, the terminal device is responsible for data collection and preprocessing, and selects an execution policy based on a received classification result, and the cloud device is responsible for receiving preprocessed data, obtaining a corresponding classification result, and sending the classification result to the terminal device. In this case, the AI task may be divided into two AI subtasks, and the terminal device and the cloud device are responsible for executing different AI subtasks. In other words, for an AI task that needs to be jointly executed by the terminal device and the cloud device, subtasks of the AI task that are respectively executed by the terminal device and the cloud device may be set in the task set. For further example, the AI task is an image search task, and the AI subtasks may be respectively corresponding to a task 1-1 and a task 3-2. In other words, a combination of the task 1-1 and the task 3-2 is the image search task, the task 1-1 is a subtask that needs to be executed by the terminal device in the image search task, and the task 3-2 is a subtask that needs to be executed by the cloud device in the image search task. However, it should be understood that the task number in the foregoing example is merely for ease of understanding and is not limited.

It should be further noted that the foregoing AI subtask that needs to be jointly executed may be scheduled together with another independently executed AI task. Therefore, in a scheduling process, terminal devices that execute the AI subtasks may be switched, and cloud devices that execute the AI subtasks may also be switched. For ease of understanding, the foregoing image search task is still used as an example. It is assumed that in the image search task, a subtask 1 is: capturing an image, extracting an image feature, uploading an image feature vector, receiving an image category, and searching according to the image category; and a subtask 2 is: obtaining an image feature vector, processing the image feature vector by using an image classification model to obtain an image category, and sending the image category. Executable tasks of the terminal device #1 and the terminal device #2 each include the subtask 1, and executable tasks of the cloud device #3 and the cloud device #4 (another cloud device) each include the subtask 2. During scheduling, the subtask 1 may be separately executed by the terminal device #1 or the terminal device #2, or the subtask 2 may be separately executed by the cloud device #3 and the cloud device #4, and therefore a combination for executing the image search task may be any combination of the terminal device #1 and the cloud device #3, the terminal device #1 and the cloud device #4, the terminal device #2 and the cloud device #3, or the terminal device #2 and the cloud device #4. However, it should be understood that in some cases, for example, the terminal device has resources and a capability for executing the subtask 2, or the cloud device has resources and a capability for executing the subtask 1, the terminal device #1 and the terminal device #2 may be combined to execute the image search task, or the cloud device #3 and the cloud device #4 may be combined to execute the image search task. Details are not described herein again.

The terminal device #1 and the terminal device #2 implement interaction of the AI tasks by using the scheduling device #1. The scheduling device #1 is mainly configured to collect resource information of all terminal devices, and schedule tasks in the task set 1 based on the resource information. In other words, the scheduling device #1 may allocate the tasks in the task set 1 to different terminal devices for execution. However, it should be noted that the scheduling device #1 may be an independent device, but may also be a module, a unit, or an apparatus disposed in an existing device, for example, may be a scheduling apparatus disposed in the terminal device #1 and the terminal device #2, or in some cases, may be a scheduling apparatus disposed in a cloud device.

Optionally, the scheduling device #1 may implement task allocation by using a distributed scheduling method. For example, the scheduling device #1 may receive resource information reported by the terminal device #1 and/or the terminal device #2, including configuration information, a current task execution status, and the like, and then allocate a task to an idle and/or high-configuration terminal device and/or cloud device based on the received resource information.

As shown in FIG. 1, an AI task executed by each artificial intelligence device is shared, or referred to as interactive. The AI task may be allocated by the scheduling device #1 to a different artificial intelligence device based on an actual situation.

It should be noted that, in embodiments of this application, the artificial intelligence device is a device that can execute an AI task, that is, includes both a terminal device that can execute an AI task and a cloud device that can execute an AI task. For example, the terminal device #1, the terminal device #2, and the cloud device #3 shown in FIG. 1 each belong to the artificial intelligence device (referred to as an AI device for short below) in this application.

The terminal device may also be understood as user equipment (UE), or may be referred to as an access terminal, a subscriber unit, a subscriber station, a remote terminal, a mobile device, a user terminal, a terminal, a user apparatus, or the like. In embodiments of this application, the user equipment includes a module, a unit, or an apparatus that can execute an AI task. In other words, the user equipment can execute one or more AI tasks. The user equipment in embodiments of this application may be a headset (headset/earphone), a mobile phone, a tablet computer (pad), a computer, virtual reality (VR) user equipment, augmented reality (AR) user equipment, a smart device in industrial control, a smart device in self-driving, a smart device in telemedicine (remote medical), a smart device in a smart grid, a smart device in transportation safety, a smart device in a smart city, a smart device in a smart home, a smart screen, a smart television, an intelligent robot, an intelligent storage device, a handheld device with an AI function, a computing device or another processing device connected to an AI processor, a vehicle-mounted device, a wearable device, user equipment in a 5G network, user equipment in a non-public network, or the like.

The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device directly worn on the body or integrated into clothes or an accessory of a user. The wearable device is not only a hardware device, but also implements a powerful function through software support, data exchange, and cloud interaction. Generalized wearable intelligent devices include full-featured and large-size devices that can implement complete or partial functions without depending on smartphones, such as smart watches or smart glasses, and devices that focus on only one type of application and need to work with other devices such as smartphones, such as various smart bands or smart jewelry for monitoring physical signs.

The cloud device in embodiments of this application may be understood as a network side device, for example, a server, a host, or a data processing device. The cloud device usually has a higher configuration and a stronger operation capability than the terminal device, and can undertake a complex operation. For some AI tasks, the terminal device and the cloud device may cooperate for execution.

In the scenario shown in FIG. 1, in the method in this embodiment of this application, an idle device can share an execution task of a busy device, and a device with a high configuration can assist in some operations of a device with a low configuration, and the like.

For example, it is assumed that the terminal device #1 is a headset and can perform a voice wakeup task, and it is assumed that the terminal device #2 is a mobile phone and can perform tasks such as voice wakeup, voice search, and speech recognition. In this case, similarly, although both the headset and the mobile phone can execute the voice wakeup task, because AI computing power of the headset is weak, only a voice wakeup model with low precision and small occupied space can be used, and therefore precision for executing voice wakeup is also low; while AI computing power of the mobile phone is strong, and a voice wakeup model with higher precision and large occupied space may be used, and therefore precision for executing voice wakeup is high and an operation rate is high, and further an execution rate is high. In the scenario shown in FIG. 1, the mobile phone may undertake an operation part of voice wakeup. The headset only needs to transmit obtained voice data to the mobile phone and receive a processing result of the mobile phone, so that a better execution result can be obtained by using a voice wakeup model with high precision, and an operation rate of the mobile phone is also faster. Therefore, the execution result may be obtained by taking a shorter time.

For another example, it is assumed that both the terminal device #1 and the terminal device #2 are mobile phones, and can execute tasks such as speech recognition, image classification, facial recognition, and video search. It is assumed that the terminal device #1 is being used to execute a video search task, and there are tasks to be executed in a queue such as image classification and facial recognition. However, the terminal device #2 has no task to be executed. In the scenario shown in FIG. 1, the terminal device #2 may share the to-be-executed tasks of the terminal device #1, for example, execute the tasks such as image classification and facial recognition that are to be executed in a queue. In this manner, resources of both the terminal device #1 and the terminal device #2 are more fully utilized, an execution rate of the AI task is improved, and a waiting time of the to-be-executed task is shortened.

FIG. 2 is a schematic diagram of a system architecture according to an embodiment of this application. As shown in FIG. 2, the system 200 includes an AI device 210, an AI device 220, a scheduling module 230, and a storage module 240. Both the AI device 210 and the AI device 220 may be configured to execute one or more AI tasks. The AI device 210 and the AI device 220 may be any AI device described above, for example, a local AI device or a cloud AI device.

Optionally, the AI device 210 and the AI device 220 may include an AI engine, and the AI engine is configured to execute an AI task. Optionally, the AI device 210 and the AI device 220 may further send or transmit resource information of the AI device 210 and the AI device 220 to the scheduling module 230. The resource information is information about an AI computing resource used to execute the AI task. The AI computing resource may include at least one of the following: a hardware AI computing resource or a software AI computing resource, and includes one or more of the following information: information such as storage space required by a model, an input type, an output type, computing power, an operating time length, and a quantity of input/output apparatuses.

The scheduling module 230 is configured to obtain resource information from an AI device, for example, the resource information from the AI device 210 and/or the AI device 220, and perform AI task scheduling on the AI device based on the obtained resource information. The scheduling process may include: allocating an AI task to an AI device. When a new model needs to be loaded, the scheduling process may further include: obtaining a new model from the storage module 240, and sending and transmitting the new model to a corresponding AI device.

The storage module 240 is configured to store a model of an AI task. According to a model size, the task model may include a small model and a large model, or may include a small model, a medium model, and a large model. The small model may also be referred to as a lightweight model, or the like. In other words, there is no limitation on how many levels are classified, provided that the task model is classified according to the model size, or it may be understood that the task model is classified according to a size of occupied storage space. According to execution precision, the task model may include a low-precision model and a high-precision model, or may include a low-precision model, a medium-precision model, a high-precision model, and the like. In other words, there is no limitation on how many levels or layers are classified, provided that the task model is classified according to precision. Generally, for same tasks, higher precision indicates a larger model.

It should be noted that the scheduling module 230 shown in FIG. 2 may alternatively be a scheduling unit, a scheduling apparatus, a scheduling device, or the like, and may be independent, or may be disposed in any one or more AI devices. A specific form of the scheduling module 230 is not limited in this embodiment. The storage module 240 shown in FIG. 2 may also be a storage unit, a storage apparatus, a storage device, or the like, and may be independent, but may also be disposed in the scheduling module 230, or may be disposed in the AI device but independent of the scheduling module 230. Alternatively, the scheduling module 230 and the storage module 240 may be integrated together, and the integration of the scheduling module 230 and the storage module 240 may also be used as an independent module, unit, apparatus, device, or the like.

Optionally, the system shown in FIG. 2 may further include a communication module (not shown in the figure), configured to implement interaction between the AI device (for example, the AI device 210 or the AI device 220) and the scheduling module 230, interaction between the AI device 210 and the AI device 220, interaction between the scheduling module 230 and the storage module 240, or interaction between the storage module 240 and the AI device.

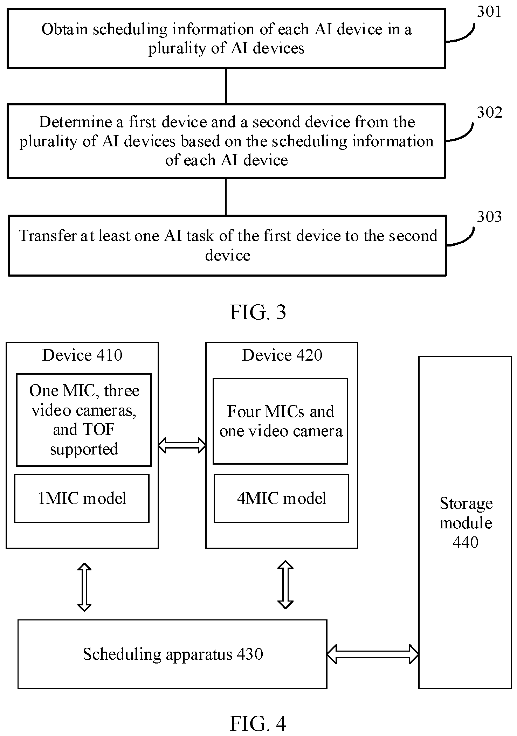

FIG. 3 is a schematic flowchart of a scheduling method according to an embodiment of this application. The method shown in FIG. 3 may be performed by the terminal device and/or the scheduling device in the scenario shown in FIG. 1, or may be performed by the system shown in FIG. 2. The following provides descriptions with reference to the steps in FIG. 3.

301: Obtain scheduling information of each AI device in a plurality of AI devices. Optionally, the scheduling information may include at least one of the following: resource information of the AI device or task information of the AI device.

Optionally, the AI device may be any terminal device described above, or may be any cloud device described above. It is assumed that when a task is originally jointly executed by an artificial intelligence device and a cloud device, the task is now transferred to be executed by another artificial intelligence device, which is equivalent to being jointly executed by the another artificial intelligence device and the cloud device. The task information of the AI device may include information about one or more of a task that has been previously executed, a task currently being executed, or a task to be executed by the artificial intelligence device.

Optionally, the task information may be understood as information about an execution status of an AI task, and may include information such as a task type, a task quantity, a resource occupied by the task, a time length spent on each task, and task model precision or size. The task information may further include an estimated time length required by the artificial intelligence device to complete the one or more AI tasks (that is, the AI task being executed and the AI task to be executed). For brevity, the time length of the first device is referred to as a first time length, and the time length of the second device is referred to as a second time length.

It should be noted that the task type may also be understood as a category of an AI task, for example, may include speech recognition, image recognition, and the like. Refer to the foregoing related descriptions, and details are not listed herein again. The task quantity may include an accumulated quantity of execution times of a historical task (for example, an accumulated quantity of execution times of a same task), a quantity of tasks being executed simultaneously, a quantity of tasks to be executed, and the like. The resource occupied by the task may be understood as usage of an AI processor by an AI task, and may include one or more resources such as an occupied storage resource, an occupied operation resource, an occupied hardware resource, or an occupied software resource. The time length spent on each task may be understood as a time length from start to end of the task, and herein may refer to a time length spent on each task that has been executed, an estimated time length spent on each task being executed, or an estimated time length spent on each task to be executed. The task model precision or size may be understood as a precision level or a size level of a model corresponding to a task.

It should be further noted that the task information does not need to be obtained continuously, for example, may be obtained when a task situation changes. In other words, an execution frequency of step 301 may be set based on an actual situation.

The resource information may be understood as information about an AI computing resource used to execute the AI task. The AI computing resource may include one or more resources such as a hardware AI computing resource and a software AI computing resource.

The hardware AI computing resource may be understood as corresponding information of a hardware condition required by the device to execute an AI task, including a storage space size, a supported input type, a supported output type, a number of inputs, a number of outputs, and processor information. The storage space size may include, for example, a ROM space size and a RAM space size. The input type may include, for example, voice input, text input, image input, and video input, and may further include, for example, a microphone, a camera, a video camera, and a sensor. The number of inputs refers to one or more inputs, for example, may include one or more voice inputs, and may further include one or more microphones. The output type may include, for example, an image type, an identifier, an image or voice with an identifier, and a search result, that is, processed data corresponding to different AI tasks. The number of outputs can also be one or more outputs. A processor type is a type of processor configured to perform an AI operation, for example, may include a central processing unit (CPU), a microprocessor, an application-specific integrated circuit (ASIC), a graphics processing unit (GPU), or a neural network processor (NPU).

The software AI computing resource may be understood as corresponding information for setting a software condition required for executing an AI task, for example, may include computing power, an execution time of an AI task, and the like. The computing power may be understood as an operation capability of the device when executing an AI task, for example, may be represented by OPS. Larger OPS indicates a faster operation speed of the device. When same tasks are executed, a required execution time is shorter if other conditions are the same. The execution time of the AI task may be understood as a time length from initiation to end of an AI task.

Optionally, an executable task of the AI device may be determined based on the foregoing resource information. The executable task may be understood as an AI task executed by using the AI device. Optionally, information such as a type of the executable task, an execution time required by each executable task, and a model corresponding to the executable task may be determined based on the foregoing resource information. The corresponding model may have been configured on the device, or may have not been configured on the device. Information about the executable task may include information such as a model size, model precision, an input type, an output type, and computing amount (computing power required when the model is used for operation) that are of the corresponding model, and may further include a processor type required by the corresponding model.

It should be noted that, because the resource information usually does not change frequently, the resource information of the artificial intelligence device may be obtained when the artificial intelligence device is powered on, and does not need to be obtained frequently. It should be further understood that resource information of a plurality of artificial intelligence devices may be obtained simultaneously, or may not be obtained simultaneously, and there is no limitation on an obtaining sequence.

Further, a time length threshold is preset. A first time length threshold and a second time length threshold are set. The first time length threshold is a critical value at which the artificial intelligence device is about to enter a busy state. In other words, when it is estimated that the artificial intelligence device still needs a long time to process all tasks, it is considered that the artificial intelligence device is busy. Therefore, when a time length still required to process the all tasks is greater than or equal to the first time length threshold, it is considered that the artificial intelligence device is in the busy state. The second time length threshold is a critical value at which the artificial intelligence device is about to enter an idle state. In other words, when the artificial intelligence device is about to complete all tasks or there is no task that needs to be executed, it is considered that the artificial intelligence device is idle. Therefore, when an estimated time length required for completing the all tasks is less than or equal to the second time length threshold, it is considered that the artificial intelligence device is in the idle state or is about to enter the idle state. For the time length required by the AI device to execute the AI task (for example, the first time length of the first device or the second time length of the second device), the first time length threshold may be understood as an upper limit value of the time length required by the AI device to execute the AI task, and the second time length threshold may be understood as a lower limit value of the time length required by the AI device to execute the AI task. For example, when the time length required by the AI device to execute the AI task is greater than or equal to the first time length threshold, the artificial intelligence device may report task information, so that the task information of the artificial intelligence device can be obtained. For another example, when the time length required by the AI device to execute the AI task is less than or equal to the second time length threshold, the artificial intelligence device may report task information, so that the task information of the artificial intelligence device can be obtained. It should be noted that only the first time length threshold or the second time length threshold may be set, or both the first time length threshold and the second time length threshold may be set.

302: Determine a first device and a second device from the plurality of AI devices based on the scheduling information of each AI device.

Optionally, the second device may be configured to execute at least one of an AI task being executed and an AI task to be executed by the first device. In other words, the second device can execute one or more AI tasks of the first device. For example, assuming that the first device can execute tasks of voice wakeup, image classification, and video search, and a device can execute the voice wakeup task, the device may be used as the second device. Assuming that the device can execute all the AI tasks of the first device, the device may also be used as the second device.

Optionally, when the second device is determined based on whether the second device can execute the AI tasks being executed by the first device and/or can execute the AI tasks to be executed by the first device, so that the second device can subsequently share, for the first device, these tasks being executed or to be executed.

Optionally, the first device may be a device that is in the plurality of AI devices and whose AI computing resources are less than AI computing resources of the second device. In other words, it is expected that at least one AI task in one or more tasks (the task being executed or to be executed) of an artificial intelligence device with a small quantity of resources is allocated to an artificial intelligence device with a large quantity of resources.

It should be noted that the small quantity of available resources may be understood as a small quantity of or weak AI computing resources. In other words, a quantity of resources used by the artificial intelligence device to execute the AI task is small or the resources used by the artificial intelligence device to execute the AI task are weak. For example, storage space is limited, and a model with high precision cannot be supported. For another example, computing power of the artificial intelligence device is insufficient, and a complex operation cannot be supported. For another example, an execution rate is low.

It should be further understood that, in this case, it is equivalent to that, in the AI devices participating in scheduling, the device with the small quantity of resources is determined as the first device, and the device with the large quantity of resources is determined as the second device.

The first device and the second device are determined from the plurality of AI devices based on that the first time length of the first device is greater than or equal to the second time length of the second device. The first time length is a time required by the first device to complete one or more AI tasks. The one or more AI tasks may include at least one of an AI task being executed by the first device and/or an AI task to be executed by the first device. The second time length is a time length required by the second device to complete one or more AI tasks. The one or more AI tasks may include at least one of an AI task being executed by the second device and/or an AI task to be executed by the second device. That is, this is equivalent to transferring some or all of tasks of a busy AI device in the plurality of AI devices to an idle AI device.

It should be noted that, in this case, it is equivalent to that, in the AI devices participating in scheduling, the busy device is determined as the first device, and the idle device is determined as the second device.

The first device and the second device are further determined in a manner of setting a time length threshold. The first time length threshold and the second time length threshold are set, and the first time length threshold is greater than the second time length threshold. When the first time length of the first device is greater than or equal to the first time length threshold and the second time length of the second device is less than or equal to the second time length threshold, some or all of the AI tasks of the first device are transferred to the second device, that is, this is equivalent to transferring some or all of tasks of an AI device in a busy state in the plurality of AI devices to an AI device in an idle state.

303: Transfer the at least one AI task of the first device to the second device.

Optionally, some or all of the AI tasks being executed by the first device may be transferred to the second device, and/or some or all of the AI tasks to be executed by the first device may be transferred to the second device. In other words, the transferred AI task is at least one of the one or more AI tasks of the first device. It may also be understood that the transferred AI task is at least one of the AI task being executed or the AI task to be executed by the first device, and is an AI task executed by the second device.

It should be understood that the AI task may be transferred based on another basis. For example, a priority sequence of the AI devices may be set, and an AI device with a higher priority is set to preferably execute an AI task, and an AI device with a lower priority then executes an AI task. For further example, the priority may be determined based on the resource information of the AI device, and an AI device with a large quantity of resources is set to have a high priority. For another example, priorities of the AI device for different AI task categories may be set. For example, assuming that an AI device is mainly configured to process an image-related AI task, the image-related AI task may be preferably transferred to the AI device. Another non-image-related AI task that originally needs to be executed by the AI device is preferably transferred to another device.

It should be further understood that, in the method shown in FIG. 3, there may be a case in which no transfer is finally performed. For example, it is assumed that when it is found that all AI devices are busy, the AI task may not be transferred. For another example, although the first device has an AI task to be executed, the AI task cannot be executed by the second device. The foregoing case of no transfer may be considered as that no suitable second device is found.

Optionally, the transferring of the AI task may include model loading (configuration) and data loading. The model loading may be understood as configuring a model corresponding to the transferred AI task on the second device. For example, if a speech recognition task needs to be transferred, a speech recognition model may be configured for the second device. The data loading may be understood as that data needs to be provided for the second device when the AI task is transferred, so that the second device can process to-be-processed data. For example, for an image classification task, the data loading may be understood as providing to-be-processed image data for the second device by the first device, so that the second device can process the to-be-processed image data by using a model corresponding to the image classification task.

Optionally, when the second device already has a model of a to-be-transferred AI task, the second device is instructed to use the existing model to execute a corresponding AI task without reloading a model. For example, if the determined at least one AI task to be transferred to the second device includes one speech recognition task, and the second device already has a proper speech recognition model, the second device is instructed to execute the speech recognition task by using the existing speech recognition model, and no model needs to be configured for the second device.

Optionally, when the second device does not have a model of a to-be-transferred AI task, the model that the second device does not have is sent to the second device, and the second device is instructed to use the obtained model to execute a corresponding AI task, which is equivalent to a case in which a model needs to be reloaded. For example, if the determined at least one AI task to be transferred to the second device includes one speech recognition task, but the second device does not have a speech recognition model or an existing speech recognition model is not proper, a proper voice model may be sent to the second device, and the second device is instructed to execute the speech recognition task by using the received proper speech recognition model, which is equivalent to a case in which a model needs to be configured for the second device.

For example, it is assumed that one AI device is a tablet, and the other AI device is a smart screen. Both of them can execute a voice search task. However, the tablet has poor computing power, a voice search model mounted on the tablet is a small model (or a low-precision model), and a voice search model of the smart screen is a large model (or a high-precision model). When a voice search task that originally needs to be executed on the tablet is transferred to the smart screen for execution, the original high-precision voice search model of the smart screen may be used for execution. Assuming that there is no voice search model in the smart screen originally, a high-precision voice search model may be loaded (which may also be referred to as configured, set, downloaded, or loaded) for the smart screen. For example, the model may be requested to be downloaded from a device that stores models or cloud storage. Assuming that there is a voice search model in the smart screen originally, but the model is a low-precision voice search model, a high-precision model may still be loaded to the smart screen, or it may be considered that the original model is replaced.

In the method shown in FIG. 3, the plurality of AI devices can collaborate, and utilization of artificial intelligence resources can be improved. Specifically, an idle AI device can share a task of a busy AI device, and an AI device with a large quantity of resources (for example, a high configuration) can help (or assist) an AI device with a small quantity of resources (for example, a low configuration) to implement higher execution precision and/or a higher execution rate.

It should be noted that, in this embodiment of this application, the AI device may include a terminal device, or may include a cloud device. For example, a task originally executed by a terminal device is transferred to another terminal device. For another example, a task originally executed by a cloud device is transferred to another cloud device. In addition, the task transfer between the terminal devices and the task transfer between the cloud devices may be performed simultaneously, or may not be performed simultaneously. For example, it is assumed that an original task 1 is executed by a terminal device 1 and a cloud device 1. According to the method shown in FIG. 3, based on resource information and task information of the terminal device 1, the cloud device 1, another terminal device, and another cloud device, the task 1 may be jointly executed by the another terminal device and the cloud device 1, or jointly executed by the terminal device 1 and the another cloud device, or jointly executed by the another terminal device and the another cloud device. Therefore, for brevity, details are not described again. Even in some cases, a task of a terminal device may be transferred to a cloud device, or a task of a cloud device may be transferred to a terminal device.

An execution process of the method shown in FIG. 3 between devices is described below by using an example with reference to FIG. 4. FIG. 4 is a schematic diagram of a scheduling method according to an embodiment of this application. As shown in FIG. 4, FIG. 4 further details the embodiment corresponding to FIG. 2. In this scenario, a device 410, a device 420, a scheduling apparatus 430, and a storage apparatus 440 are included. Resource information of the device 410 includes an input apparatus and an operation resource. The input apparatus is a sensor, includes one microphone and three video cameras, and supports laser time-of-flight (TOF) ranging. The operation resource includes a model supporting one MIC (referred to as a 1MIC model for brevity). The resource information of the device 420 includes an input apparatus and an operation resource, where the input apparatus is a sensor and includes four microphones and one video camera. The operation resource includes a model supporting four MICs (referred to as a 4MIC model for brevity).

In the scenario shown in FIG. 4, the scheduling apparatus 430 obtains resource information and task information of the device 410, and resource information and task information of the device 420. It is found, based on the obtained task information of the device 410, that the device 410 is currently idle (the first time length is less than or equal to the second time length threshold), the device 420 is currently busy (the first time length is greater than or equal to the first time length threshold), and the device 410 can support an operation of the 4MIC model. Based on this, the scheduling apparatus 430 transfers an operation task of the 4MIC model to the device 1 for execution. Therefore, the scheduling apparatus 430 indicates the device 420 to collect voice data by using the four microphones, convert the voice data into a format input into the 4MIC model, send the voice data to the device 410, and receive a processing result of the device 410. The scheduling apparatus 430 instructs the device 410 to perform an operation. After receiving the instruction of the scheduling apparatus 430, the device 410 may initiate a request to the scheduling apparatus 430 because the device 410 has only the 1MIC model but does not have the 4MIC model, and the scheduling apparatus 430 obtains the 4MIC model from the storage apparatus 440, and sends or transmits the 4MIC model to the device 410. The device 410 installs the 4MIC model, receives voice data from the device 420, processes the voice data by using the 4MIC model, and sends a processing result to the device 420.

It should be understood that, in the scenario shown in FIG. 4, the device 410 and the device 420 may be AI devices of a same category, or may be AI devices of different categories. This is not limited.

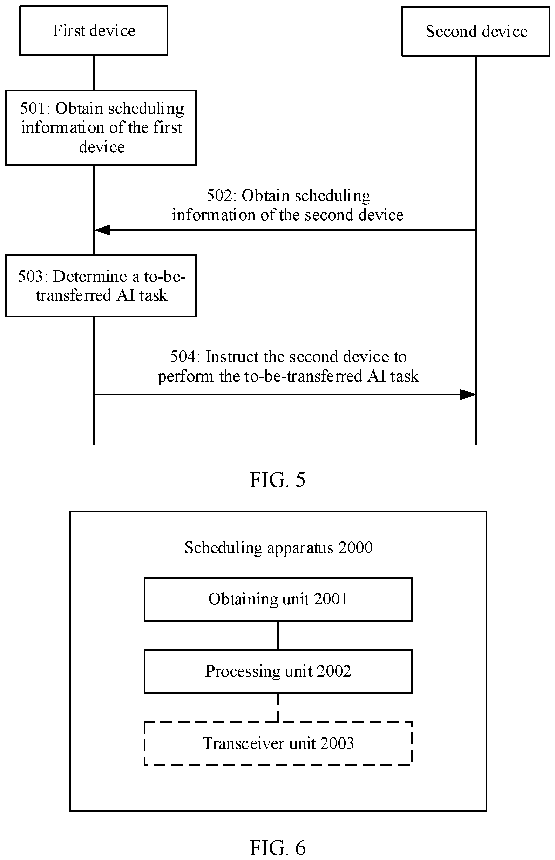

It should be noted that both the scheduling apparatus 430 and the storage apparatus 440 may be independent apparatuses, or may be apparatuses integrated in the device 410 and the device 420. When being integrated into the device 410 and the device 420, this is equivalent to an interaction process between devices shown in FIG. 5, and is described below with reference to FIG. 5.

FIG. 5 is a schematic flowchart of a scheduling method according to an embodiment of this application. The method shown in FIG. 5 may be performed by the terminal device and/or the scheduling device in the scenario shown in FIG. 1, or may be performed by the system shown in FIG. 2. The following provides descriptions with reference to the steps in FIG. 5.

501: Obtain scheduling information of the first device. Optionally, the scheduling information may include at least one of the following: task information of the first device or resource information of the first device.

The task information of the first device may include at least one of the following: information about an AI task that has been previously executed, information about an AI task being executed, and information about an AI task to be executed by the first device. The task information may include information such as a type, a required resource, a time length actually spent in execution, and model precision of a task that has been previously executed, information such as a type, a required resource, an estimated time length that needs to be further spent in completing the task, and model precision of a task currently being executed, and information such as a type, a required resource, an estimated time length that needs to be spent in each task to be executed, and model precision of a task to be executed. The task information of the first device further includes an estimated time length (that is, the first time length) required by the first device to complete all AI tasks being executed and to be executed. For details, refer to the related description of the task information in step 301 in FIG. 3. The task information of the first device may be determined based on the resource information of the first device and a received task request.

The resource information of the first device may be used to indicate information about an AI computing resource of the first device, and may include a hardware AI computing resource, a software AI computing resource, and the like of the first device. For details, refer to the related description of the resource information in step 301 in FIG. 3.

It should be noted that, because the resource information usually does not change frequently, the resource information of the first device may be obtained when the first device is powered on, and does not need to be obtained frequently. Optionally, information about an executable task of the first device may be further determined based on the resource information of the first device.

502: Obtain scheduling information of the second device.

Optionally, the scheduling information of the second device may include at least one of the following: task information of the second device or resource information of the second device.

Optionally, the resource information of the second device may indicate an AI computing resource used by the second device to execute an AI task. The AI computing resource may include at least one of the following: a hardware AI computing resource and a software AI computing resource. For details, refer to descriptions of the resource information of the first device. Details are not described herein again.

Optionally, task information of the second device may be further obtained. The task information of the second device may include information about a task currently being executed and a task to be executed, for example, information such as a type, a quantity, an occupied resource, an estimated time length that needs to be further spent in completing the task, and model precision of the task currently being executed, and information such as a type, a quantity, a resource that needs to be occupied, an estimated time length that needs to be spent on each task to be executed, and model precision of the task to be executed. The task information of the second device further includes an estimated time length that is further spent in completing all tasks (including the task currently being executed and the task to be executed), that is, the second time length of the second device.

It should be understood that, in this embodiment of this application, the second device is a device that can provide task assistance. In other words, the device is idle, or AI task usage in the current device is low, or the second device can perform a complex operation, or the like. This is because, assuming that the second device itself is busy and cannot assist the first device, there is no need to perform a task scheduling operation on the second device, or it may be considered that the second device is a busy device, that is, the second device in this case should be the first device in step 501. In short, in the method shown in FIG. 5, for ease of understanding, the first device refers to a device that needs assistance, and the second device refers to a device that can provide assistance.

It should be noted that the resource information of the second device also does not need to be frequently obtained, and may be obtained when the second device is powered on, for example, is sent to the first device when the second device is powered on. It should be further noted that, in the method shown in FIG. 5, because the second device is a device that can provide assistance, more attention is paid to what assistance the second device can provide, and task information of the second device may or may not be obtained. For example, when the second device is idle, the second device may not report the task information, that is, this is equivalent to that the second device only needs to report that the second device is idle, may assist in processing the AI task, and report resource information of the second device. It is assumed that the task information of the second device is still reported when the second device is idle. The idle may be understood as that the first time length is less than or equal to the second time length threshold. For example, the following cases may be included. There is no task being executed, there are few tasks being executed, or there is no task to be executed. The task information of the second device obtained in this case may include, for example, the following cases: If there is no task being executed, a type of the task being executed is empty, a quantity of tasks being executed is 0, an occupied resource of the task being executed is 0, estimated duration that still needs to be spent in completing the task is 0, and model precision of the task being executed is empty. For another example, if there is no task to be executed, a type of the task to be executed is empty, a quantity of tasks to be executed is 0, an occupied resource of the task to be executed is 0, estimated duration that still needs to be spent in completing the task is 0, and model precision of the task to be executed is empty. If no task is being executed or to be executed, the estimated duration for completing all the tasks is 0. It should be understood that, generally, to reduce unnecessary resource waste, there is no task to be executed when there is no task being executed.

503: Determine a to-be-transferred AI task based on the scheduling information of the second device and the scheduling information of the first device.

The to-be-transferred AI task indicates at least one AI task in the determined one or more AI tasks transferred to the second device, and the one or more AI tasks include an AI task being executed by the first device and/or an AI task to be executed by the first device.

Optionally, it may be determined, based on the task information of the first device, to allocate some or all of the tasks to be executed to the second device, and/or determine to allocate some or all of the tasks being executed to the second device. In this case, it is equivalent to that the scheduling information of the first device includes the task information of the first device. For example, assuming that it is found, based on the resource information of the second device and the tasks to be executed in the current first device, that some or all of the tasks to be executed may also be executed by the second device, the some or all of the tasks to be executed may be executed by the second device, and corresponding scheduling information may be generated to indicate the second device to execute the some or all of the tasks to be executed by the first device. However, it should be understood that the tasks being executed by the first device may also be allocated to the second device.

Optionally, an execution process of the AI task may be further split. For example, one part of the execution process of the AI task is executed by the second device, and the other part of the execution process of the AI task continues to be executed by the first device. Optionally, assuming that it is found, based on the resource information of the second device and the resource information of the first device, that the second device has a large quantity of resources and can undertake a more complex operation, for example, storage space is large and/or computing power of a processor is strong, some tasks (for example, a task that expects to have higher precision) may be transferred to the second device.

504: Instruct the second device to execute the to-be-transferred AI task.

Optionally, the foregoing communication module (which may also be a unit, an apparatus, or the like) may be used to send information about the determined to-be-transferred AI task to the second device.

Optionally, it may be further determined whether the second device has a model required for executing the to-be-transferred AI task. When the second device has the corresponding model, the existing model is directly used to execute the to-be-transferred task. When the second device does not have the corresponding model, the model that the second device does not have is allocated to the second device. For a specific process, refer to the foregoing related operation of transferring the AI task of the first device to the second device. Details are not described herein again.

Optionally, when the second device does not have at least one model in the to-be-transferred AI task, a new model of a corresponding AI task (an AI model that is required by the to-be-transferred AI task and that does not exist) may be downloaded from the second device, or may replace or update an existing AI task model.

In the method shown in FIG. 5, a task that cannot be executed or whose execution effect is poor due to a limitation of the first device is executed or assisted by the second device, so that utilization of artificial intelligence resources can be effectively improved. However, it should be noted that the method shown in FIG. 5 is described from a perspective of the first device, or may be described from a perspective of the second device, and is still true. In other words, when the second device is in an idle state, after receiving the scheduling information of the first device, the second device determines the to-be-transferred AI task based on the scheduling information of the second device and the scheduling information of the first device, that is, the second device executes or assists in executing some or all of the AI tasks of the first device. For brevity, details are not described again.

In the foregoing embodiments, for example, the method shown in FIG. 3 and the method shown in FIG. 5, because different models are usually required for executing different AI tasks, and different processors may be further required, an initial AI resource may be first set for each device.

Optionally, a manner of combining pre-installation and request loading may be used, so that models of different devices can meet requirements. The pre-installation may be performed when an initial AI resource is set, which is equivalent to installing a different AI task model for each device in an initial state. The request loading manner means that when a device needs to execute an AI task but has no corresponding proper model, the device initiates a request, and then obtains a corresponding model from an apparatus or a unit that stores models.

Optionally, after a new model is installed and a corresponding task is executed, the device may further delete the new model, to release a resource occupied by the new model. Optionally, to further reduce storage overheads, a periodic aging mechanism may be further used. In other words, a model that has not been used for a long time is deleted from the AI device, and is downloaded again when necessary. For example, a third time length threshold may be preset, and a model is deleted when a time interval from a time when the model is used for the last time is greater than or equal to the third time length threshold.

Optionally, an AI task corresponding to the model that has not been used for a long time may be referred to as a first AI task, and the model that has not been used for a long time may be referred to as a model of the first AI task. It is assumed that when a third device in the plurality of AI devices includes the first AI task, the third device is instructed to delete the model of the first AI task. It should be noted that the third device is a device that is in the plurality of AI devices and that has an AI task that has not been executed for a long time.

Optionally, the model may be separately and centrally stored. In other words, a storage apparatus of the model is independent of the AI device (including a terminal device and a cloud device), so that storage space of the AI device is not occupied by a large quantity of models. In this case, model transmission between the storage apparatus and the AI device may be implemented by using a communication interface, a transmission unit, or the like.

Optionally, in any embodiment of this application, the model may be further labeled, so that different devices each can quickly select a proper model based on the label. That is, a label is set for the model, to simplify a selection process.

Optionally, whether the second device may have a corresponding model of the to-be-transferred AI task is determined based on the model label. In other words, whether the second device has a model of the to-be-transferred AI task is determined based on the model label. For example, it is assumed that the to-be-transferred AI task includes an image recognition task, and the task model is a high-precision model. However, it is found, based on the model label, that the second device has no model used for the image recognition task. In this case, a model corresponding to the to-be-transferred AI task (which is specifically the image recognition task in this example) is a model that is of the to-be-transferred AI task and that the second device does not have. For another example, assuming that the second device has a model of an image recognition task, but the model is a low-precision model, a model corresponding to the to-be-transferred AI task (which is specifically the image recognition task in this example) is still a model that is of a to-be-transferred AI task and that the second device does not have. For another example, assuming that the second device has a high-precision model of the image recognition task, and meets a model requirement of the to-be-transferred AI task, the image recognition model already had by the second device is a model that is of the to-be-transferred AI task and that the second device has.

Optionally, a model corresponding to the to-be-transferred AI task may be further quickly selected from the storage apparatus based on the model label, and sent to the second device.

The following describes the model labeling and the basis for selecting the model.

Optionally, models of different AI tasks may be stored in a cloud device, or may be stored in a local device having large operation and storage capabilities, for example, a host. Model parameters can be used to add different labels to models, for example, computing amount, a model size, an input type, an output type, and an AI task category of a model.

Optionally, the computing amount of the model may be classified into three levels: large, small, and light, which are respectively represented by MAX, MINI, and LITE, or may be understood as a large model, a small model, and a lightweight model. For example, a model whose computing amount is greater than or equal to 1000 mega (million, M) OPS may be classified into a MAX level, a model whose computing amount is less than 1000 MOPS and greater than or equal to 200 MOPS may be classified into a MINI level, and a model whose computing amount is less than 200 MOPS may be classified into a LITE level.

Optionally, ROM space occupied by the model may be classified into three levels: MAX, MINI, and LITE in a similar division manner. For example, the following classification is performed: MAX (occupied ROM space is greater than or equal to 200 MB), MINI (occupied ROM space is less than 200 MB and greater than or equal to 40 MB), and LITE (occupied ROM space is less than 40 MB).

Optionally, RAM space occupied by the model may be classified into three levels: MAX, MINI, and LITE in a similar division manner. For example, the following classification is performed: MAX (occupied RAM space is greater than or equal to 500 MB), MINI (occupied RAM space is less than 500 MB and greater than or equal to 200 MB), and LITE (occupied RAM space is less than 200 MB).

Optionally, an input type of the model may include a floating point type and an integer type. The floating-point type may include, for example, a full-precision floating-point number (full precise float), a single-precision floating-point number (single precise float), or a half-precision floating-point number (half precise float), or may be represented by using a bit number, for example, FP64, FP32, or FP16. The integer type can also be represented by a using a bit number, for example, INT16 and INT8. An output type of the model may also include a floating point type, an integer type, and the like.

Floating-point counting uses floating decimal points to represent a number in binary format of different lengths, different from a fixed-point number. The floating-point number can represent a wider range of numbers than the fixed-point number of the same bit width. Floating point numbers cannot accurately represent all real numbers, but can only use different precision that is closer to the real number for representation. In a single-precision floating-point number, four bytes, that is, 32-bit binary (or 32-bit), are used to express a number. In a double-precision floating-point number, eight bytes, that is, 64-bit, are used to express a number. In a half-precision floating-point number, 16 bits are used to express a number. Floating point numbers with different bit numbers have different expression precision, and therefore causing different calculation errors. For scientific computing that needs to process a large range of numbers and requires accurate calculation, the double-precision floating point number (FP64) is required. For common multimedia and graphics processing computing, the single-precision floating point number (FP32) is enough. For machine learning applications that require lower precision, the half-precision floating point number (FP16) is enough, and even an 8-bit floating point number is enough.

Optionally, because the foregoing different input/output types may be considered as being determined based on a data length (a bit number), or may be considered as being determined based on data complexity, the input/output types may also be classified into levels. For example, the input/output types may be classified into MAX, MINI, and LITE. Optionally, FP32, FP16, and FP8 may be classified into three levels: MAX, MINI, and LITE. It should be understood that how many levels are classified and a limitation on a data length in each level may be adjusted based on an actual situation. For example, the FP64, the FP16, and the FP8 may be separately classified into three levels: MAX, MINI, and LITE. For another example, the FP64, the FP16, and the FP8 may be separately classified into another quantity of levels, for example, four levels, two levels, and five levels, which are not listed one by one herein.

Optionally, the AI task category may also be understood as an application scenario or a usage scenario of the model, and may include one or more categories such as image classification, image super-resolution, facial recognition, voice wakeup, and video search, and a classification manner is not limited.

Now, the foregoing labels are used to label models for different devices. For ease of understanding, the following uses different device types as examples for description. As shown in Table 1, the following devices are included: a smart screen, a computer (represented by a PC in Table 1), a tablet computer (represented by a tablet in Table 1), a mobile phone, an in-vehicle terminal (represented by an in-vehicle infotainment system in Table 1), a watch, and a headset. It should be noted that this is merely an example, and there is no limitation. In addition, each type of device may have a different model label. For example, if devices are both mobile phones, model labels are different due to different configurations.

**Table 1 Model labeling of different AI devices**

| Model parameter | Smart scree n | PC | Tablet | Mobile ph one | Head uni t | Watch | Headset |
|---|---|---|---|---|---|---|---|
| Computing amount | MAX | MAX | MAX | MINI | MINI | MINI | LITE |
| ROM size occupied by a model | MAX | MAX | MINI | Lite | MINI | LITE | LITE |
| RAM size occupied by a model | MAX | MAX | MINI | MINI | MINI | LITE | LITE |
| Model input and ou tput types | MAX | MAX | MINI | MINI | MINI | LITE | LITE |
| AI task category | Image supe r-resolution Voice wake up Video searc h | Image cla ssification Facial rec ognition Video sear ch | Image cla ssification Facial rec ognition Video sear ch | Image cla ssification Facial rec ognition Voice wak eup | Voice sea rch Facial re cognition Voice wa keup | Voice s earch Voice wakeup | Voice s earch Voice wakeup |

Through the preceding model labeling, proper models can be quickly found and allocated to different devices. In the method in this embodiment of this application, the artificial intelligence resources can be fully utilized through collaboration between the devices. For example, although the smart screen has a strong computing capability, assuming that there is no video camera or a pixel of a video camera is low, a video camera of the mobile phone may be used, so that the smart screen can also perform a related task that needs to obtain an image and/or a video. For another example, a service such as gesture recognition may be implemented with assistance of the mobile phone. For another example, assuming that the mobile phone is used to perform speech recognition in a vehicle, a plurality of microphone inputs of an in-vehicle terminal may be used to improve accuracy of input voice data, and an operation is performed by using resources of the mobile phone, thereby improving accuracy of speech recognition.

FIG. 6 is a schematic block diagram of a scheduling apparatus according to an embodiment of this application. The scheduling apparatus 2000 shown in FIG. 6 includes an obtaining unit 2001 and a processing unit 2002. The scheduling apparatus 2000 may be configured to perform steps of the scheduling method in this embodiment of this application. For example, the obtaining unit 2001 may be configured to perform step 301 in the scheduling method shown in FIG. 3, and the processing unit 2002 may be configured to perform step 302 in the scheduling method shown in FIG. 3. For another example, the obtaining unit 2001 may be configured to perform steps 501 and 502 in the scheduling method shown in FIG. 5, and the processing unit 2002 may be configured to perform step 503 in the scheduling method shown in FIG. 5.

The scheduling apparatus 2000 may further include a transceiver unit 2003, configured to perform step 504 in the scheduling method shown in FIG. 5, and may be configured to perform model and data transmission and information exchange between the devices, between the device and the scheduling apparatus, and between the scheduling apparatus and the storage apparatus in the foregoing scheduling method.

Optionally, the scheduling apparatus 2000 may further include a storage unit (not shown in the figure), configured to store models of different AI tasks. The storage unit may be integrated with the processing unit 2002, or may be independent of another unit of the scheduling apparatus 2000. It should be noted that the storage apparatus may be independent of the scheduling apparatus 2000. In this case, it is equivalent to that the scheduling apparatus 2000 does not store the AI task model. When the model is required, the model is obtained from the storage apparatus by using the transceiver unit 2003.

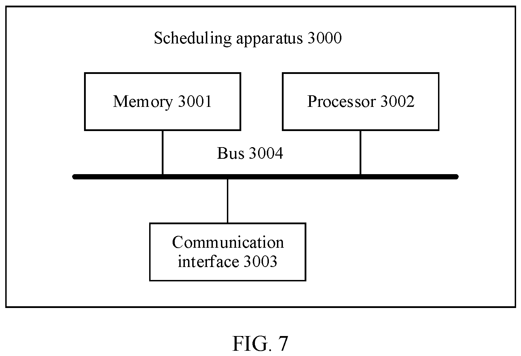

Optionally, the apparatus 2000 may correspond to the scheduling module 230 shown in FIG. 2, or may correspond to integration of the scheduling module 230 and the storage module 240 shown in FIG. 2, or may be integrated into the AI device 210 and the AI device 220 shown in FIG. 2. The apparatus 2000 may further correspond to the scheduling apparatus 430 shown in FIG. 4, or may correspond to integration of the scheduling apparatus 430 and the storage apparatus 440 shown in FIG. 4, or may be integrated into the device 410 and the device 420 shown in FIG. 4. The apparatus 2000 may be independent of a device that executes an AI task, for example, a terminal device and/or a cloud device that execute an AI task. Alternatively, the apparatus 2000 may be integrated into a device that executes an AI task, for example, disposed in a terminal device and/or a cloud device. In addition, the processing unit 2002 in the apparatus 2000 shown in FIG. 6 may be equivalent to the processor 3002 in the apparatus 3000 shown in FIG. 7.

FIG. 7 is a schematic diagram of a hardware structure of a scheduling apparatus according to an embodiment of this application. The scheduling apparatus 3000 shown in FIG. 7 includes a memory 3001, a processor 3002, a communication interface 3003, and a bus 3004. The memory 3001, the processor 3002, and the communication interface 3003 are communicatively connected to each other through the bus 3004. The memory 3001 may be a ROM, a static storage device, a dynamic storage device, or a RAM. The memory 3001 may store a program. When the program stored in the memory 3001 is executed by the processor 3002, the processor 3002 and the communication interface 3003 are configured to perform steps in the scheduling method in embodiments of this application. The processor 3002 may be a general-purpose CPU, a microprocessor, an ASIC, a GPU, or one or more integrated circuits, and is configured to execute a related program, to implement a function that needs to be performed by a unit in the scheduling apparatus in embodiments of this application, or perform the steps in the scheduling method in embodiments of this application.

The processor 3002 may alternatively be an integrated circuit chip and has a signal processing capability. In an implementation process, the steps performed by the terminal device in the scheduling method in embodiments of this application can be implemented by using a hardware integrated logic circuit or instructions in a form of software in the processor 3002.

The foregoing processor 3002 may be further a general-purpose processor, a digital signal processor (DSP), an ASIC, a field programmable gate array (FPGA) or another programmable logic device, a discrete gate or transistor logic device, or a discrete hardware component. It may implement or perform the methods, the steps, and logical block diagrams that are disclosed in embodiments of this application. The general-purpose processor may be a microprocessor, or the processor may be any conventional processor or the like. Steps of the methods disclosed with reference to embodiments of this application may be directly executed and accomplished by using a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory 3001. The processor 3002 reads information in the memory 3001, and completes, in combination with hardware of the processor, a function that needs to be performed by a unit included in the scheduling apparatus in embodiments of this application, or performs the steps of the scheduling method in embodiments of this application.

The communication interface 3003 uses a transceiver apparatus, for example but not limited to, a transceiver, to implement communication between the apparatus 3000 and another device or a communication network. For example, first data may be sent by using the communication interface 3003, and for another example, a scheduling processing result may be received by using the communication interface 3003. The bus 3004 may include a path for transmitting information between the components (for example, the memory 3001, the processor 3002, and the communication interface 3003) of the apparatus 3000. It should be noted that the scheduling apparatus 3000 may also be independent of a device for executing an AI task, or may be integrated into a device for executing an AI task.

It should be noted that although only the memory, the processor, and the communication interface in the foregoing apparatus 3000 are shown, in a specific implementation process, a person skilled in the art should understand that the apparatus 3000 may further include another component required for implementing normal running. In addition, based on a specific requirement, a person skilled in the art should understand that the apparatus 3000 may further include hardware components for implementing other additional functions.

A person of ordinary skill in the art may be aware that, in combination with the examples described in embodiments disclosed in this specification, units and algorithm steps, for example, units for implementing functions of the apparatus in FIG. 6, may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed systems, apparatuses, and methods may be implemented in another manner. For example, the described apparatus embodiment is merely an example. For example, division into the units shown in FIG. 6 is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A computer-implemented artificial intelligence resource scheduling method, comprising:
obtaining scheduling information of each artificial intelligence, AI, device in a plurality of AI devices, wherein the scheduling information comprises task information of one or more AI tasks executed by each AI device and optionally
resource information of each AI device, the one or more AI tasks comprise at least one of an AI task being executed or an AI task to be executed by each AI device, and the resource information indicates an AI computing resource used by each AI device to execute the one or more AI tasks;
determining a first device and a second device from the plurality of AI devices based on the scheduling information of each AI device, wherein task information of the first device comprises a first time length which is an estimated time length required by the first device to complete all AI tasks being executed and to be executed, wherein task information of the second device comprises a second time length which is an estimated time length required by the second device to complete all AI tasks being executed and to be executed; and
transferring at least one AI task in one or more AI tasks of the first device to the second device,
wherein the first device and the second device meet the following condition: the first time length required by the first device to complete the one or more AI tasks of the first device is greater than the second time length required by the second device to complete one or more AI tasks of the second device,
wherein the first time length is greater than or equal to a first time length threshold, the second time length is less than or equal to a second time length threshold, and the first time length threshold is greater than the second time length threshold.

2. The method according to claim 1, wherein the AI computing resource comprises at least one of the following: a hardware AI computing resource or a software AI computing resource.

3. The method according to claim 1 or 2, wherein the first device and the second device meet the following condition:
a first AI computing resource of the first device is less than a second AI computing resource of the second device.

4. The method according to any one of claims 1 to 3, wherein the transferring at least one AI task in one or more AI tasks of the first device to the second device comprises at least one of the following operations:
when the second device has at least one model, instructing the second device to execute the at least one AI task by using the at least one model, wherein the at least one model is an AI model that executes the at least one AI task; and
when the second device does not have the at least one model, sending the at least one model to the second device, and instructing the second device to execute the at least one AI task by using the at least one model.

5. The method according to claim 4, wherein the method further comprises: determining, based on a model label stored in the second device, whether the second device has the at least one model, and the model label is used to label one or more current AI models of the second device, and indicates at least one of the following parameters: computing amount, a model size, an input type, an output type, or an AI task category.

6. The method according to any one of claims 1 to 5, wherein the method further comprises:
instructing the second device to delete, after completing execution of the at least one AI task, one or more models corresponding to the at least one AI task.

7. An artificial intelligence resource scheduling apparatus, comprising:
an obtaining unit, configured to obtain scheduling information of each artificial intelligence, AI, device in a plurality of AI devices, wherein the scheduling information comprises task information of one or more AI tasks executed by each AI device and optionally
resource information of each AI device, the one or more AI tasks comprise at least one of an AI task being executed or an AI task to be executed by each AI device, and the resource information indicates an AI computing resource used by each AI device to execute the one or more AI tasks; and
a processing unit, configured to determine a first device and a second device from the plurality of AI devices based on the scheduling information of each AI device, wherein task information of the first device comprises a first time length which is an estimated time length required by the first device to complete all AI tasks being executed and to be executed, wherein task information of the second device comprises a second time length which is an estimated time length required by the second device to complete all AI tasks being executed and to be executed, and
transfer at least one AI task in one or more AI tasks of the first device to the second device,
wherein the first device and the second device meet the following condition: the first time length required by the first device to complete the one or more AI tasks of the first device is greater than the second time length required by the second device to complete one or more AI tasks of the second device,
wherein the first time length is greater than or equal to a first time length threshold, the second time length is less than or equal to a second time length threshold, and the first time length threshold is greater than the second time length threshold.

8. The apparatus according to claim 7, wherein the AI computing resource comprises at least one of the following: a hardware AI computing resource or a software AI computing resource.

9. The apparatus according to claim 8, wherein the first device and the second device meet the following condition: a first AI computing resource of the first device is less than a second AI computing resource of the second device.

10. The apparatus according to any one of claims 7 to 9, wherein the processing unit is specifically configured to perform at least one of the following operations:
when the second device has at least one model, instructing the second device to execute the at least one AI task by using the at least one model, wherein the at least one model is an AI model that executes the at least one AI task; and
when the second device does not have the at least one model, sending the at least one model to the second device, and instructing the second device to execute the at least one AI task by using the at least one model.

11. The apparatus according to claim 10, wherein the processing unit is further configured to: determine, based on a model label stored in the second device, whether the second device has the at least one model, and the model label is used to label one or more current AI models of the second device, and indicates at least one of the following parameters: computing amount, a model size, an input type, an output type, or an Al task category.

12. The apparatus according to any one of claims 7 to 11, wherein the processing unit is further configured to instruct the second device to delete, after completing execution of the at least one AI task, one or more models corresponding to the at least one AI task.

13. A computer-readable storage medium, wherein the computer-readable medium stores program code to be executed by a device, and the program code, when executed by the device, is
used for performing the method according to any one of claims 1 to 6.

14. A chip, wherein the chip comprises a processor and a data interface, and the processor reads, through the data interface, instructions stored in a memory, to perform the method according to any one of claims 1 to 6.

## Patentansprüche

1. Computerimplementiertes Verfahren zur Ressourcenplanung von künstlicher Intelligenz, umfassend:
Erlangen von Planungsinformationen jeder Einrichtung mit künstlicher Intelligenz, KI, in einer Vielzahl von KI-Einrichtungen, wobei
die Planungsinformationen Aufgabeninformationen einer oder mehrerer KI-Aufgaben, die von jeder KI-Einrichtung ausgeführt werden, und optional
Ressourceninformationen jeder KI-Einrichtung umfassen, die eine oder die mehreren KI-Aufgaben mindestens eine einer KI-Aufgabe,
die durch jede KI-Einrichtung ausgeführt wird oder auszuführen ist, umfassen und die Ressourceninformationen eine KI-Rechenressource angeben, die durch jede KI-Einrichtung verwendet wird, um die eine oder die mehreren KI-Aufgaben auszuführen;
Bestimmen einer ersten Einrichtung und einer zweiten Einrichtung aus der Vielzahl von KI-Einrichtungen basierend auf den Planungsinformationen jeder KI-Einrichtung, wobei die Aufgabeninformationen der ersten Einrichtung eine erste Zeitdauer umfassen, die eine geschätzte Zeitdauer ist, welche die erste Einrichtung benötigt, um sämtliche KI-Aufgaben, die ausgeführt werden und auszuführen sind, abzuschließen, wobei die Aufgabeninformationen der zweiten Einrichtung eine zweite Zeitdauer umfassen, die eine geschätzte Zeitdauer ist, welche die zweite Einrichtung benötigt, um sämtliche KI-Aufgaben, die ausgeführt werden und auszuführen sind, abzuschließen; und
Übertragen von mindestens einer KI-Aufgabe in einer oder mehreren KI-Aufgaben der ersten Einrichtung auf die zweite Einrichtung,
wobei die erste Einrichtung und die zweite Einrichtung die folgende Bedingung erfüllen: die erste Zeitdauer, welche die erste Einrichtung benötigt, um die eine oder die mehreren KI-Aufgaben der ersten Einrichtung abzuschließen, ist größer als die zweite Zeitdauer, welche die zweite Einrichtung benötigt, um eine oder mehrere KI-Aufgaben der zweiten Einrichtung abzuschließen,
wobei die erste Zeitdauer größer als ein erster Zeitdauerschwellenwert oder gleich diesem ist, die zweite Zeitdauer kleiner als ein zweiter Zeitdauerschwellenwert oder
gleich diesem ist und der erste Zeitdauerschwellenwert größer als der zweite Zeitdauerschwellenwert ist.

2. Verfahren nach Anspruch 1, wobei die KI-Rechenressource mindestens eine von einer Hardware-KI-Rechenressource oder einer Software-KI-Rechenressource umfasst.

3. Verfahren nach Anspruch 1 oder 2, wobei die erste Einrichtung und die zweite Einrichtung die folgende Bedingung erfüllen: eine erste KI-Rechenressource der ersten Einrichtung ist kleiner als eine zweite KI-Rechenressource der zweiten Einrichtung.

4. Verfahren nach einem der Ansprüche 1 bis 3, wobei das Übertragen von mindestens einer KI-Aufgabe in einer oder mehreren KI-Aufgaben der ersten Einrichtung auf die zweite Einrichtung mindestens einen der folgenden Vorgänge umfasst:
wenn die zweite Einrichtung mindestens ein Modell aufweist, Anweisen der zweiten Einrichtung, die mindestens eine KI-Aufgabe unter Verwendung des mindestens einen Modells auszuführen, wobei das mindestens eine Modell ein KI-Modell ist, das die mindestens eine KI-Aufgabe ausführt; und
wenn die zweite Einrichtung nicht das mindestens eine Modell aufweist, Senden des mindestens einen Modells an die zweite Einrichtung und Anweisen der zweiten Einrichtung, die mindestens eine KI-Aufgabe unter Verwendung des mindestens einen Modells auszuführen.

5. Verfahren nach Anspruch 4, wobei das Verfahren ferner Folgendes umfasst: Bestimmen, basierend auf einer in der zweiten Einrichtung gespeicherten Modellbezeichnung, ob die zweite Einrichtung das mindestens eine Modell aufweist, und die Modellbezeichnung verwendet wird, um eines oder mehrere aktuelle KI-Modelle der zweiten Einrichtung zu bezeichnen, und mindestens einen der folgenden Parameter angibt: Rechenmenge, eine Modellgröße, einen Eingabetyp, einen Ausgabetyp oder eine KI-Aufgabenkategorie.

6. Verfahren nach einem der Ansprüche 1 bis 5, wobei das Verfahren ferner Folgendes umfasst:
Anweisen der zweiten Einrichtung, nach Abschluss der Ausführung der mindestens einen KI-Aufgabe ein oder mehrere Modelle zu löschen, die der mindestens einen KI-Aufgabe entsprechen.

7. Vorrichtung zur Ressourcenplanung von künstlicher Intelligenz, umfassend:
eine Erlangungseinheit, die dazu konfiguriert ist, Planungsinformationen jeder Einrichtung mit künstlicher Intelligenz, KI, in einer Vielzahl von KI-Einrichtungen zu erlangen, wobei die Planungsinformationen Aufgabeninformationen einer oder mehrerer KI-Aufgaben, die durch jede KI-Einrichtung ausgeführt werden, und optional
Ressourceninformationen jeder KI-Einrichtung umfassen, die eine oder die mehreren KI-Aufgaben mindestens eine einer KI-Aufgabe, die durch jede KI-Einrichtung ausgeführt wird oder auszuführen ist, umfassen und die Ressourceninformationen eine KI-Rechenressource angeben, die durch jede KI-Einrichtung verwendet wird, um die eine oder die mehreren KI-Aufgaben auszuführen; und
eine Verarbeitungseinheit, die dazu konfiguriert ist, eine erste Einrichtung und eine zweite Einrichtung aus der Vielzahl von KI-Einrichtungen basierend auf den Planungsinformationen jeder KI-Einrichtung zu bestimmen, wobei die Aufgabeninformationen der ersten Einrichtung eine erste Zeitdauer umfassen, die eine geschätzte Zeitdauer ist, welche die erste Einrichtung benötigt, um sämtliche KI-Aufgaben abzuschließen, die ausgeführt werden und auszuführen sind, wobei die Aufgabeninformationen der zweiten Einrichtung eine zweite Zeitdauer umfassen, die eine geschätzte Zeitdauer ist, welche die zweite Einrichtung benötigt, um sämtliche KI-Aufgaben abzuschließen, die ausgeführt werden und auszuführen sind; und
mindestens eine KI-Aufgabe in einer oder mehreren KI-Aufgaben der ersten Einrichtung auf die zweite Einrichtung zu übertragen, wobei die erste Einrichtung und die zweite Einrichtung die folgende Bedingung erfüllen: die erste Zeitdauer, welche die erste Einrichtung benötigt, um die eine oder die mehreren KI-Aufgaben der ersten Einrichtung abzuschließen, ist größer als die zweite Zeitdauer, welche die zweite Einrichtung benötigt,
um eine oder mehrere KI-Aufgaben der zweiten Einrichtung abzuschließen,
wobei die erste Zeitdauer größer als ein erster Zeitdauerschwellenwert oder gleich diesem ist, die zweite Zeitdauer kleiner als ein zweiter Zeitdauerschwellenwert oder
gleich diesem ist und der erste Zeitdauerschwellenwert größer als der zweite Zeitdauerschwellenwert ist.

8. Vorrichtung nach Anspruch 7, wobei die KI-Rechenressource mindestens eine der Folgenden umfasst: eine Hardware-KI-Rechenressource oder eine Software-KI-Rechenressource.

9. Vorrichtung nach Anspruch 8, wobei die erste Vorrichtung und die zweite Vorrichtung die folgende Bedingung erfüllen:
eine erste KI-Rechenressource der ersten Einrichtung ist kleiner als eine zweite KI-Rechenressource der zweiten Einrichtung.

10. Vorrichtung nach einem der Ansprüche 7 bis 9, wobei die Verarbeitungseinheit speziell dazu konfiguriert ist, mindestens einen der folgenden Vorgänge durchzuführen:
wenn die zweite Einrichtung mindestens ein Modell aufweist, Anweisen der zweiten Einrichtung, die mindestens eine KI-Aufgabe unter Verwendung des mindestens einen Modells auszuführen, wobei das mindestens eine Modell ein KI-Modell ist, das die mindestens eine KI-Aufgabe ausführt; und
wenn die zweite Einrichtung nicht das mindestens eine Modell aufweist, Senden des mindestens einen Modells an die zweite Einrichtung und Anweisen der zweiten Einrichtung, die mindestens eine KI-Aufgabe unter Verwendung des mindestens einen Modells auszuführen.

11. Vorrichtung nach Anspruch 10, wobei die Verarbeitungseinheit ferner zu Folgendem konfiguriert ist: Bestimmen, basierend auf einer in der zweiten Einrichtung gespeicherten Modellbezeichnung, ob die zweite Einrichtung das mindestens eine Modell aufweist, und die Modellbezeichnung verwendet wird, um eines oder mehrere aktuelle KI-Modelle der zweiten Einrichtung zu bezeichnen, und mindestens einen der folgenden Parameter angibt: Rechenmenge, eine Modellgröße, einen Eingabetyp, einen Ausgabetyp oder eine KI-Aufgabenkategorie.

12. Vorrichtung nach einem der Ansprüche 7 bis 11, wobei die Verarbeitungseinheit ferner dazu konfiguriert ist, die zweite Einrichtung anzuweisen, nach Abschluss der Ausführung der mindestens einen KI-Aufgabe ein oder mehrere Modelle zu löschen, die der mindestens einen KI-Aufgabe entsprechen.

13. Computerlesbares Speichermedium, wobei das computerlesbare Speichermedium Programmcode speichert, der durch eine Einrichtung auszuführen ist, und der Programmcode, wenn er durch die Einrichtung ausgeführt wird, zum Durchführen des Verfahrens nach einem der Ansprüche 1 bis 6 verwendet wird.

14. Chip, wobei der Chip einen Prozessor und eine Datenschnittstelle umfasst und der Prozessor über die Datenschnittstelle in einem Speicher gespeicherte Anweisungen liest, um das Verfahren nach einem der Ansprüche 1 bis 6 durchzuführen.

## Revendications

1. Procédé de planification de ressources d'intelligence artificielle mis en œuvre par ordinateur, comprenant :
l'obtention d'informations de planification de chaque dispositif d'intelligence artificielle, IA, dans une pluralité de dispositifs IA, dans lequel
les informations de planification comprennent des informations de tâche sur une ou plusieurs tâches d'IA exécutées par chaque dispositif d'IA et éventuellement
des informations de ressources sur chaque dispositif d'IA, les une ou plusieurs tâches d'IA comprennent au moins l'une d'une tâche d'IA en cours d'exécution ou d'une tâche d'IA à exécuter par chaque dispositif d'IA, et les informations de ressources indiquent une ressource informatique d'IA utilisée par chaque dispositif d'IA pour exécuter les une ou plusieurs tâches d'IA ;
la détermination d'un premier dispositif et d'un second dispositif parmi la pluralité de dispositifs d'IA sur la base des informations de planification de chaque dispositif d'IA,
dans lequel les informations de tâche du premier dispositif comprennent une première durée qui est une durée estimée requise par le premier dispositif pour terminer toutes les tâches d'IA en cours d'exécution et à exécuter, dans lequel les informations de tâche du second dispositif comprennent une seconde durée qui est une durée estimée requise par le second dispositif pour terminer toutes les tâches d'IA en cours d'exécution et à exécuter ; et
le transfert d'au moins une tâche d'IA dans une ou plusieurs tâches d'IA du premier dispositif au second dispositif,
dans lequel le premier dispositif et le second dispositif répondent à la condition suivante : la première durée requise par le premier dispositif pour terminer une ou plusieurs tâches d'IA du premier dispositif est supérieure à la seconde durée requise par le second dispositif pour terminer une ou plusieurs tâches d'IA du second dispositif,
dans lequel la première durée est supérieure ou égale à un premier seuil de durée, la seconde durée est inférieure ou égale à un second seuil de durée, et le premier seuil de durée est supérieur au second seuil de durée.

2. Procédé selon la revendication 1, dans lequel la ressource informatique d'IA comprend au moins l'un des éléments suivants :
une ressource informatique d'IA matérielle ou une ressource informatique d'IA logicielle.

3. Procédé selon la revendication 1 ou 2, dans lequel le premier dispositif et le second dispositif répondent à la condition suivante :
une première ressource informatique d'IA du premier dispositif est inférieure à une seconde ressource informatique d'IA du second dispositif.

4. Procédé selon l'une quelconque des revendications 1 à 3, dans lequel le transfert d'au moins une tâche d'IA parmi une ou plusieurs tâches d'IA du premier dispositif au second dispositif comprend au moins l'une des opérations suivantes :
lorsque le second dispositif dispose d'au moins un modèle, le fait d'ordonner au second dispositif d'exécuter l'au moins une tâche d'IA en utilisant l'au moins un modèle, dans lequel l'au moins un modèle est un modèle d'IA qui exécute l'au moins une tâche d'IA ; et
lorsque le second dispositif ne dispose pas de l'au moins un modèle, l'envoi de l'au moins un modèle au second dispositif,
et le fait d'ordonner au second dispositif d'exécuter l'au moins une tâche d'IA en utilisant l'au moins un modèle.

5. Procédé selon la revendication 4, dans lequel le procédé comprend également : le fait de déterminer, sur la base d'une étiquette de modèle stockée dans le second dispositif, si le second dispositif dispose de l'au moins un modèle, et l'étiquette de modèle est utilisée pour étiqueter un ou plusieurs modèles d'IA actuels du second dispositif, et indique au moins l'un des paramètres suivants : la quantité de calcul, une taille de modèle, un type d'entrée, un type de sortie ou une catégorie de tâche d'IA.

6. Procédé selon l'une quelconque des revendications 1 à 5, dans lequel le procédé comprend également :
le fait d'ordonner au second dispositif de supprimer, après avoir terminé l'exécution de l'au moins une tâche d'IA, un ou plusieurs modèles correspondant à l'au moins une tâche d'IA.

7. Appareil de planification de ressources d'intelligence artificielle, comprenant :
une unité d'obtention, configurée pour obtenir des informations de planification de chaque dispositif d'intelligence artificielle, IA, dans une pluralité de dispositifs d'IA, dans lequel les informations de planification comprennent des informations de tâche sur une ou de plusieurs tâches d'IA exécutées par chaque dispositif d'IA et éventuellement des informations de ressources sur chaque dispositif d'IA, les une ou plusieurs tâches d'IA comprennent au moins l'une d'une tâche d'IA en cours d'exécution ou d'une tâche d'IA à exécuter par chaque dispositif d'IA, et les informations de ressources indiquent une ressource informatique d'IA utilisée par chaque dispositif d'IA pour exécuter les une ou plusieurs tâches d'IA ; et
une unité de traitement, configurée pour déterminer un premier dispositif et un second dispositif parmi la pluralité de dispositifs d'IA sur la base des informations de planification de chaque dispositif d'IA, dans lequel les informations de tâche du premier dispositif comprennent une première durée qui est une durée estimée requise par le premier dispositif pour terminer toutes les tâches d'IA en cours d'exécution et à exécuter, dans lequel les informations de tâche du second dispositif comprennent une seconde durée qui est une durée estimée requise par le second dispositif pour terminer toutes les tâches d'IA en cours d'exécution et à exécuter, et
transférer au moins une tâche d'IA dans une ou plusieurs tâches d'IA du premier dispositif au second dispositif,
dans lequel le premier dispositif et le second dispositif répondent à la condition suivante : la première durée requise par le premier dispositif pour terminer une ou plusieurs tâches d'IA du premier dispositif est supérieure à la seconde durée requise par le second dispositif pour terminer une ou plusieurs tâches d'IA du second dispositif,
dans lequel la première durée est supérieure ou égale à un premier seuil de durée, la seconde durée est inférieure ou égale à un second seuil de durée, et le premier seuil de durée est supérieur au second seuil de durée.

8. Appareil selon la revendication 7, dans lequel la ressource informatique d'IA comprend au moins l'un des éléments suivants :
une ressource informatique d'IA matérielle ou une ressource informatique d'IA logicielle.

9. Appareil selon la revendication 8, dans lequel le premier dispositif et le second dispositif répondent à la condition suivante :
une première ressource informatique d'IA du premier dispositif est inférieure à une seconde ressource informatique d'IA du second dispositif.

10. Appareil selon l'une quelconque des revendications 7 à 9, dans lequel l'unité de traitement est spécifiquement configurée pour effectuer au moins l'une des opérations suivantes :
lorsque le second dispositif dispose d'au moins un modèle, le fait d'ordonner au second dispositif d'exécuter l'au moins une tâche d'IA en utilisant l'au moins un modèle, dans lequel l'au moins un modèle est un modèle d'IA qui exécute l'au moins une tâche d'IA ; et
lorsque le second dispositif ne dispose pas de l'au moins un modèle, l'envoi de l'au moins un modèle au second dispositif,
et le fait d'ordonner au second dispositif d'exécuter l'au moins une tâche d'IA en utilisant l'au moins un modèle.

11. Appareil selon la revendication 10, dans lequel l'unité de traitement est également configurée pour : déterminer, sur la base d'une étiquette de modèle stockée dans le second dispositif, si le second dispositif dispose de l'au moins un modèle, et l'étiquette de modèle est utilisée pour étiqueter un ou plusieurs modèles d'IA actuels du second dispositif, et indique au moins l'un des paramètres suivants : une quantité de calcul, une taille de modèle, un type d'entrée, un type de sortie ou une catégorie de tâche d'IA.

12. Appareil selon l'une quelconque des revendications 7 à 11, dans lequel l'unité de traitement est également configurée pour ordonner au second dispositif de supprimer, après avoir terminé l'exécution de l'au moins une tâche d'IA, un ou plusieurs modèles correspondant à l'au moins une tâche d'IA.

13. Support de stockage lisible par ordinateur, dans lequel le support de stockage lisible par ordinateur stocke un code de programme exécuté par un dispositif, et le code de programme, lorsqu'il est exécuté par le dispositif, est utilisé pour mettre en oeuvre le procédé selon l'une quelconque des revendications 1 à 6.

14. Puce, dans laquelle la puce comprend un processeur et une interface de données, et le processeur lit, via l'interface de données, des instructions stockées dans une mémoire, pour mettre en oeuvre le procédé selon l'une quelconque des revendications 1 à 6.
